# EUROPEAN PATENT APPLICATION

(11) **EP 4 723 632 A1**
(43) Date of publication of application: **08.04.2026**
(21) Application number: 24810969.6
(22) Date of filing: 14.05.2024
(51) Int. Cl.: H04N 19/167

(54) **DECODING DEVICE, ENCODING DEVICE, DECODING METHOD, AND ENCODING METHOD**

(30) Priority: 25.05.2023 US 202363468873 P
(71) Applicant: Panasonic Intellectual Property Corporation of America, Torrance, CA 90504 (US)
(72) Inventor: TEO, Han Boon, Singapore 469332 (SG); LIM, Chong Soon, Singapore 469332 (SG); LIM, Sugiri Pranata, Singapore 469332 (SG); KARLEKAR, Jayashree, Singapore 469332 (SG); THONG, Jing Yuan, Singapore 469332 (SG); ABE, Kiyofumi, Kadoma-shi, Osaka 571-0057 (JP); NISHI, Takahiro, Kadoma-shi, Osaka 571-0057 (JP); TOMA, Tadamasa, Kadoma-shi, Osaka 571-0057 (JP)
(74) Representative: Grünecker Patent- und Rechtsanwälte PartG mbB
(86) International application number: PCT/JP2024/017767
(87) International publication number: WO 2024/241962

(57) **Abstract**

A decoder (200) includes memory (252) and circuitry (251) coupled to the memory (252). Using the memory (252), the circuitry (251): decodes, from a bitstream, a base data unit of a face image related to a face video and one or more enhancement data units of the face image; decodes, from the bitstream, geometric information corresponding to each of frames of the face video; and generates the face video from the base data unit, the one or more enhancement data units, and the geometric information. In the bitstream, the base data unit is added to a data set corresponding to a first frame that is a frame of the face video. In the bitstream, the one or more enhancement data units are added to one or more data sets corresponding to one or more second frames of the face video.

## Description

### [Technical Field]

The present disclosure relates to a decoder, etc.

### [Background Art]

With advancement in video coding technology, from H.261 and MPEG-1 to H.264/AVC (Advanced Video Coding), MPEG-LA, H.265/HEVC (High Efficiency Video Coding) and H.266/VVC (Versatile Video Codec), there remains a constant need to provide improvements and optimizations to the video coding technology to process an ever-increasing amount of digital video data in various applications. The present disclosure relates to further advancements, improvements and optimizations in video coding.

Note that Non Patent Literature (NPL) 1 relates to one example of a conventional standard regarding the above-described video coding technology.

### [Citation List]

### [Non Patent Literature]

[NPL 1] H.265 (ISO/IEC 23008-2 HEVC)/HEVC (High Efficiency Video Coding)

### [Summary of Invention]

### [Technical Problem]

Regarding the encoding scheme as described above, proposals of new schemes have been desired in order to (i) improve coding efficiency, enhance image quality, reduce processing amounts, reduce circuit scales, or (ii) appropriately select an element or an operation. The element is, for example, a filter, a block, a size, a motion vector, a reference picture, or a reference block.

The present disclosure provides, for example, a configuration or a method which can contribute to at least one of increase in coding efficiency, increase in image quality, reduction in processing amount, reduction in circuit scale, appropriate selection of an element or an operation, etc. It is to be noted that the present disclosure may encompass possible configurations or methods which can contribute to advantages other than the above advantages.

### [Solution to Problem]

For example, a decoder according to one aspect of the present disclosure includes memory and circuitry coupled to the memory. Using the memory, the circuitry: decodes, from a bitstream, a base data unit of a face image related to a face video and one or more enhancement data units of the face image; decodes, from the bitstream, geometric information corresponding to each of frames of the face video and indicating geometric attributes within a region including a face of a person; and generates the face video from the base data unit, the one or more enhancement data units, and the geometric information, using a generative model, in the bitstream, the base data unit is added to a data set corresponding to a first frame that is a frame of the face video, and in the bitstream, the one or more enhancement data units are added to one or more data sets corresponding to one or more second frames that are one or more frames of the face video and follow the first frame.

Each of embodiments, or each of part of constituent elements and methods in the present disclosure enables, for example, at least one of the following: improvement in coding efficiency, enhancement in image quality, reduction in processing amount of encoding/decoding, reduction in circuit scale, improvement in processing speed of encoding/decoding, etc. Alternatively, each of embodiments, or each of part of constituent elements and methods in the present disclosure enables, in encoding and decoding, appropriate selection of an element or an operation. The element is, for example, a filter, a block, a size, a motion vector, a reference picture, or a reference block. It is to be noted that the present disclosure includes disclosure regarding configurations and methods which may provide advantages other than the above-described ones. Examples of such configurations and methods include a configuration or method for improving coding efficiency while reducing increase in processing amount.

Additional benefits and advantages according to an aspect of the present disclosure will become apparent from the specification and drawings. The benefits and/or advantages may be individually obtained by the various embodiments and features of the specification and drawings, and not all of which need to be provided in order to obtain one or more of such benefits and/or advantages.

It is to be noted that these general or specific aspects may be implemented using a system, an integrated circuit, a computer program, or a computer readable medium (recording medium) such as a CD-ROM, or any combination of systems, methods, integrated circuits, computer programs, and media.

### [Advantageous Effects of Invention]

A configuration or method according to an aspect of the present disclosure enables, for example, at least one of the following: improvement in coding efficiency, enhancement in image quality, reduction in processing amount, reduction in circuit scale, improvement in processing speed, appropriate selection of an element or an operation, etc. It is to be noted that the configuration or method according to an aspect of the present disclosure may provide advantages other than the above-described ones.

### [Brief Description of Drawings]

[FIG. 1]

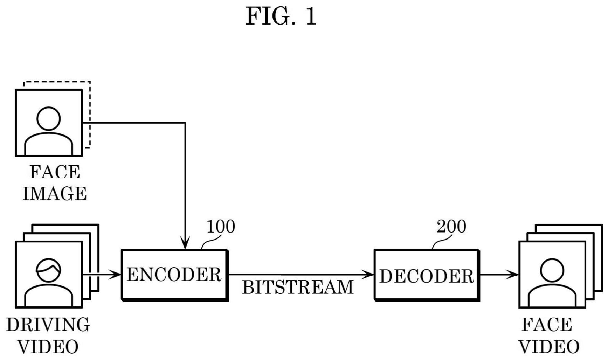

   FIG. 1 is a block diagram illustrating a configuration example of an encoding and decoding system according to an embodiment.
[FIG. 2]

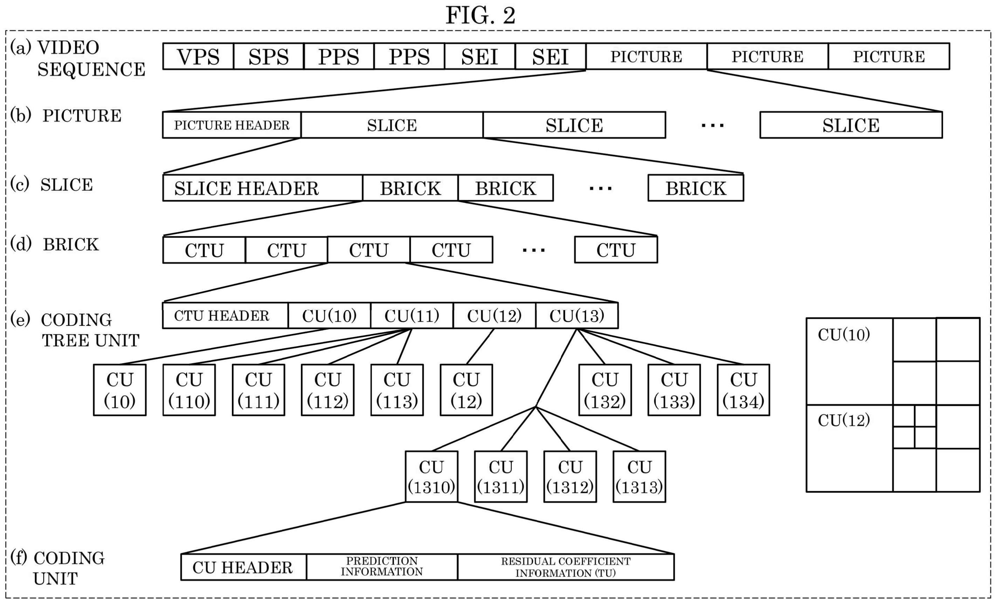

   FIG. 2 is a diagram illustrating one example of the layer structure of data in a stream.
[FIG. 3]

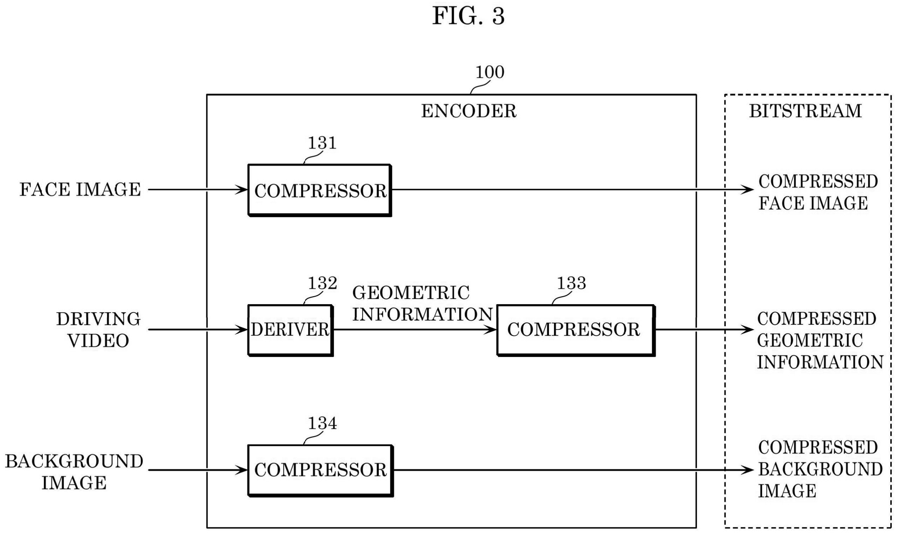

   FIG. 3 is a block diagram illustrating a configuration example of an encoder according to the embodiment.
[FIG. 4]

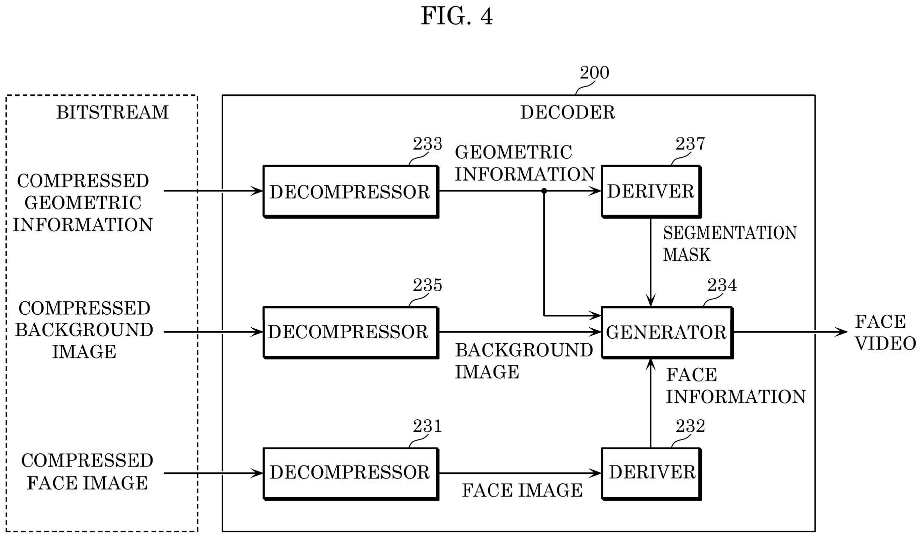

   FIG. 4 is a block diagram illustrating a configuration example of a decoder according to the embodiment.
[FIG. 5]

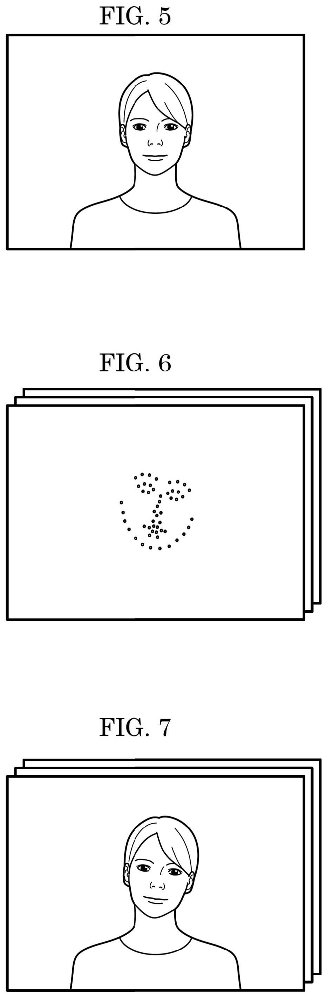

   FIG. 5 is a conceptual diagram illustrating an example of a face image.
[FIG. 6]
   FIG. 6 is a conceptual diagram illustrating an example of geometric attributes.
[FIG. 7]
   FIG. 7 is a conceptual diagram illustrating an example of a face video.
[FIG. 8]

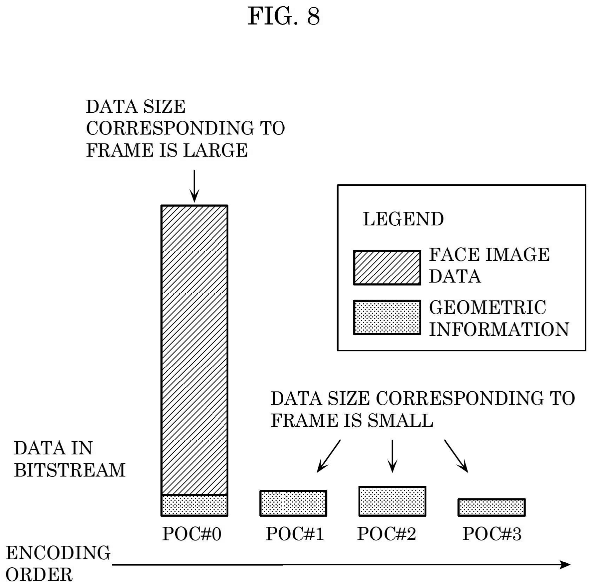

   FIG. 8 is a conceptual diagram illustrating a configuration example of data corresponding to each frame.
[FIG. 9]

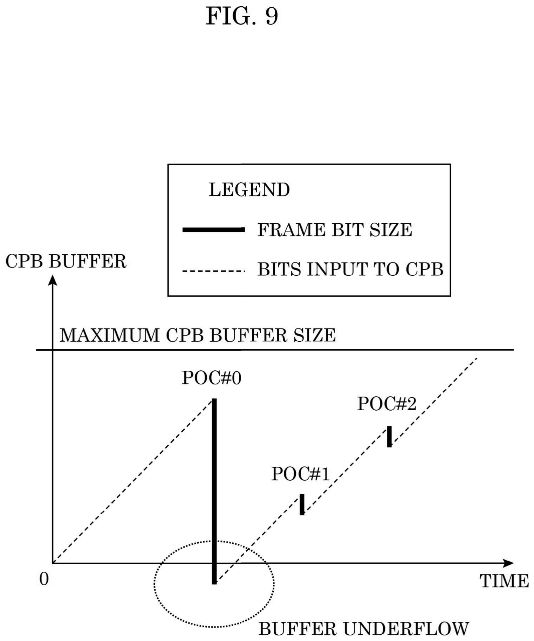

   FIG. 9 is a conceptual diagram illustrating a data size in a CPB buffer.
[FIG. 10]

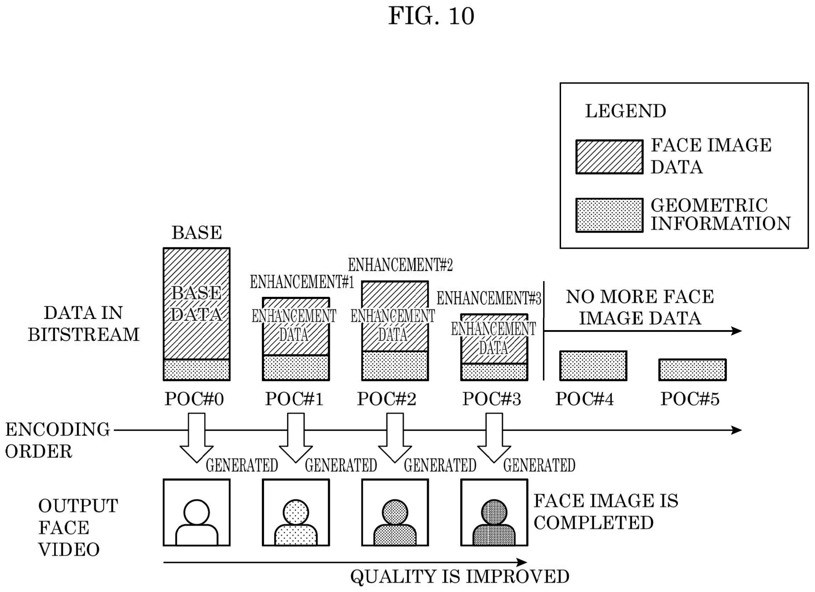

   FIG. 10 is a conceptual diagram illustrating another configuration example of data corresponding to each frame.
[FIG. 11]

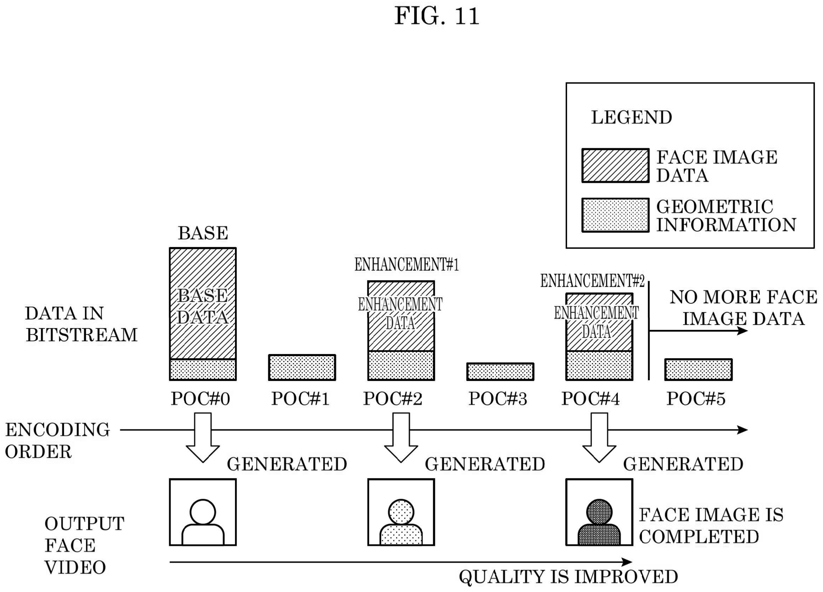

   FIG. 11 is a conceptual diagram illustrating yet another configuration example of data corresponding to each frame.
[FIG. 12]

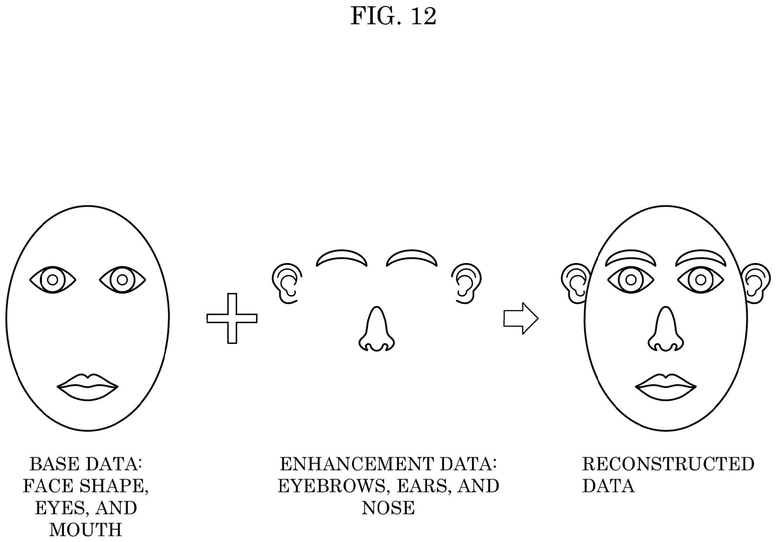

   FIG. 12 is a conceptual diagram illustrating a configuration example of a base data unit and an enhancement data unit.
[FIG. 13]

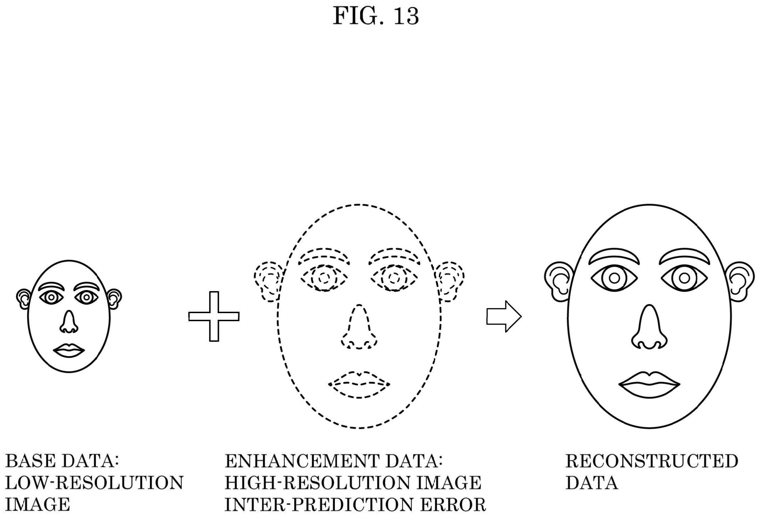

   FIG. 13 is a conceptual diagram illustrating another configuration example of the base data unit and the enhancement data unit.
[FIG. 14]

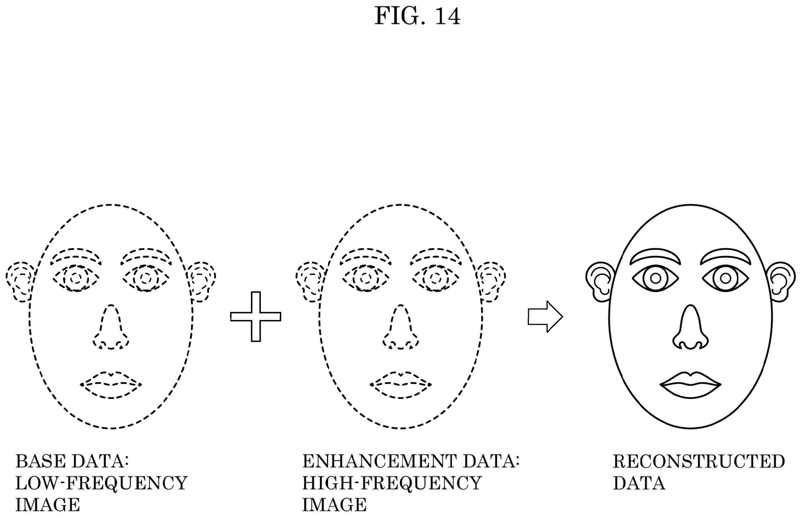

   FIG. 14 is a conceptual diagram illustrating yet another configuration example of the base data unit and the enhancement data unit.
[FIG. 15]

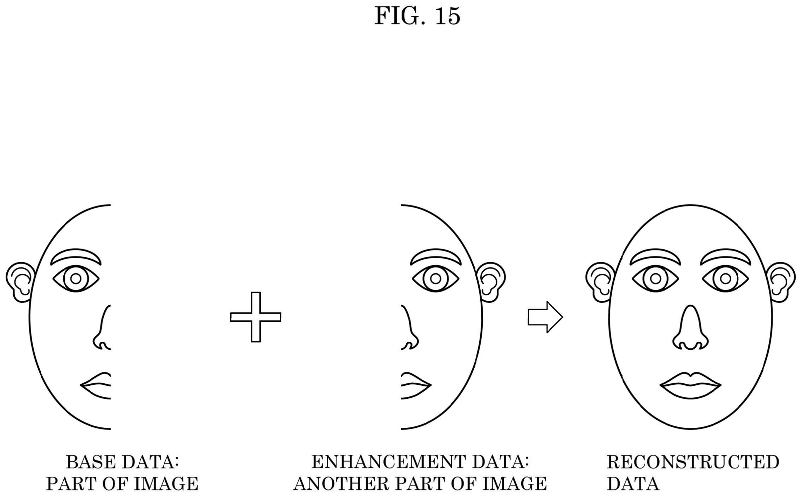

   FIG. 15 is a conceptual diagram illustrating yet another configuration example of the base data unit and the enhancement data unit.
[FIG. 16]

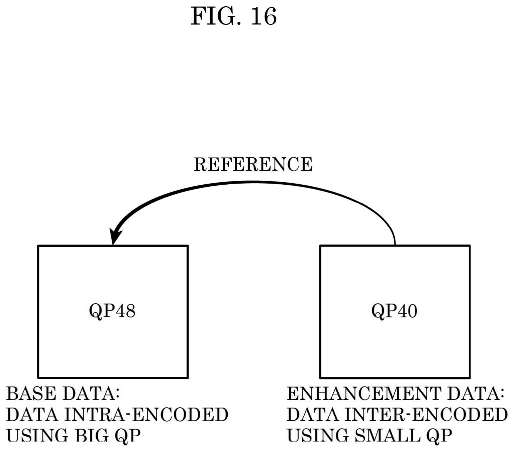

   FIG. 16 is a conceptual diagram illustrating yet another configuration example of the base data unit and the enhancement data unit.
[FIG. 17]

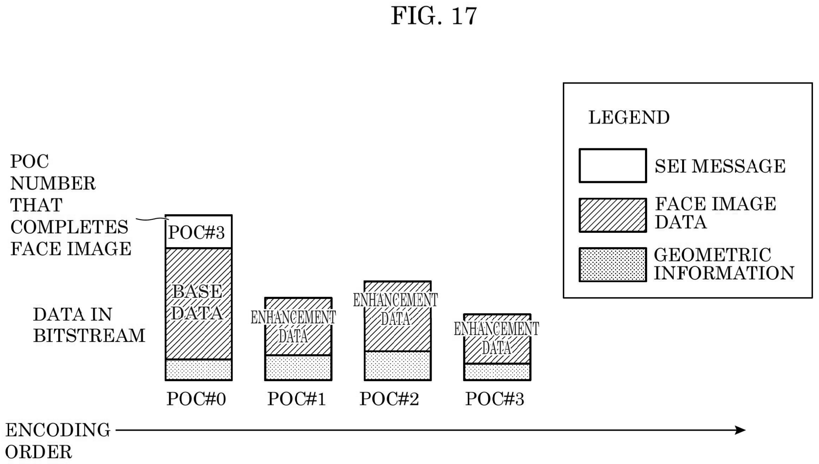

   FIG. 17 is a conceptual diagram illustrating yet another configuration example of data corresponding to each frame.
[FIG. 18]

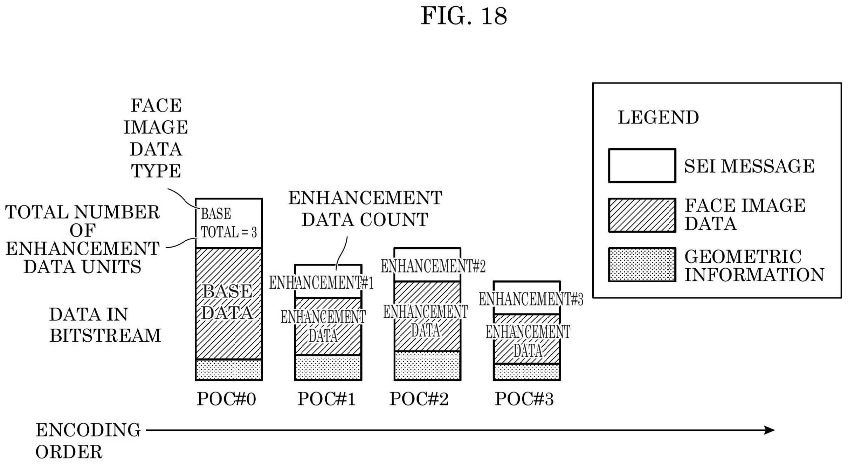

   FIG. 18 is a conceptual diagram illustrating yet another configuration example of data corresponding to each frame.
[FIG. 19]

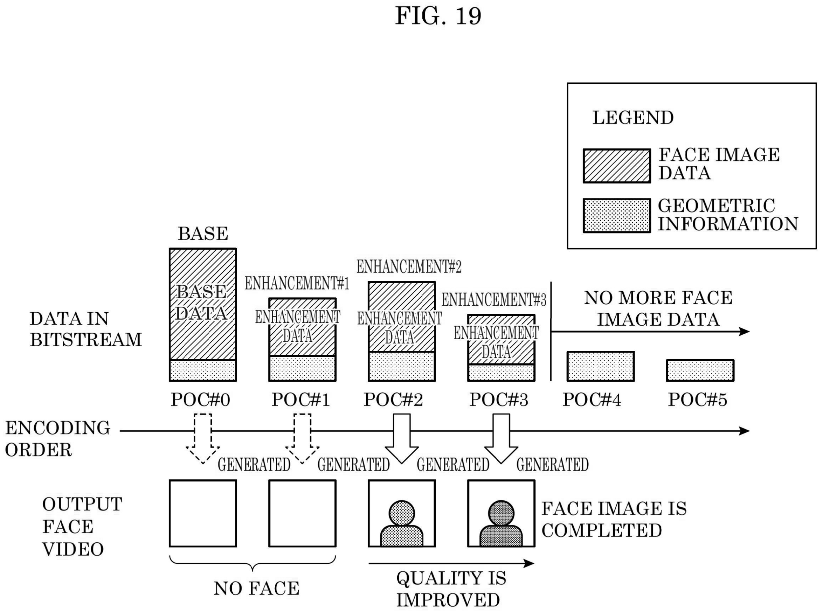

   FIG. 19 is a conceptual diagram illustrating a control example of generation of a face video.
[FIG. 20]

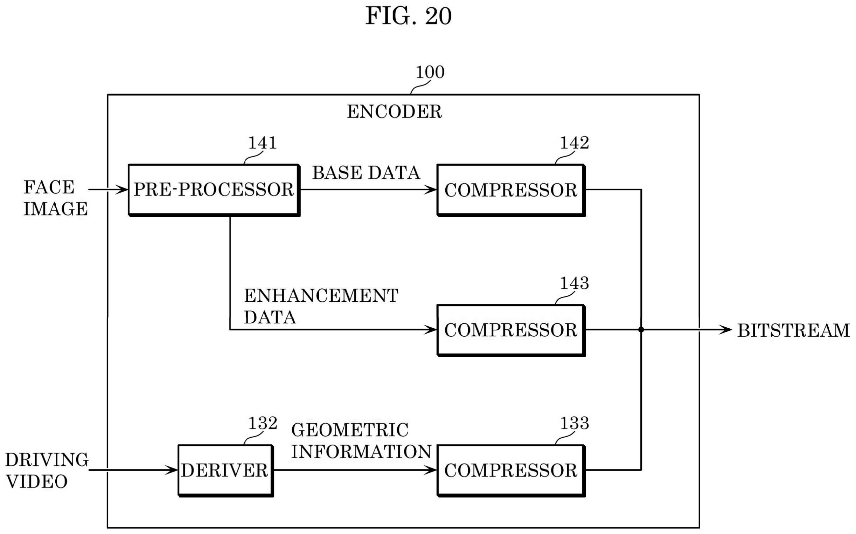

   FIG. 20 is a block diagram illustrating another configuration example of the encoder according to the embodiment.
[FIG. 21]

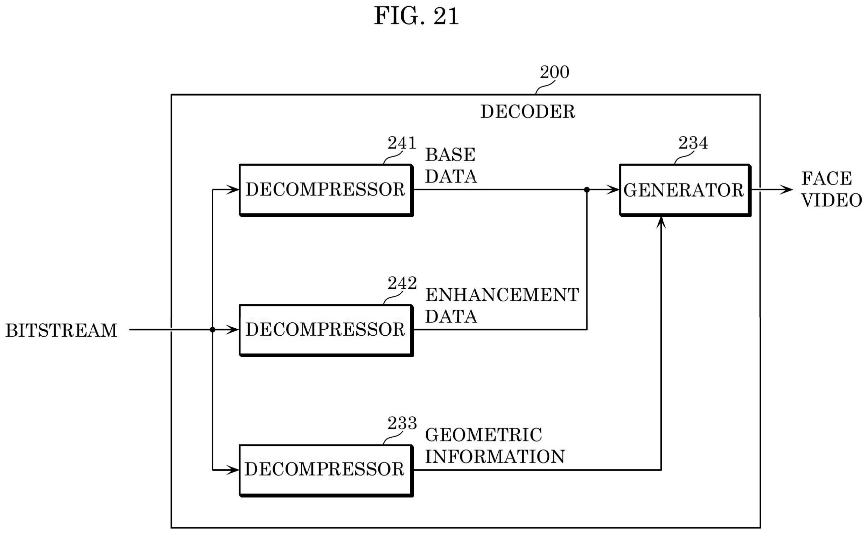

   FIG. 21 is a block diagram illustrating another configuration example of the decoder according to the embodiment.
[FIG. 22]

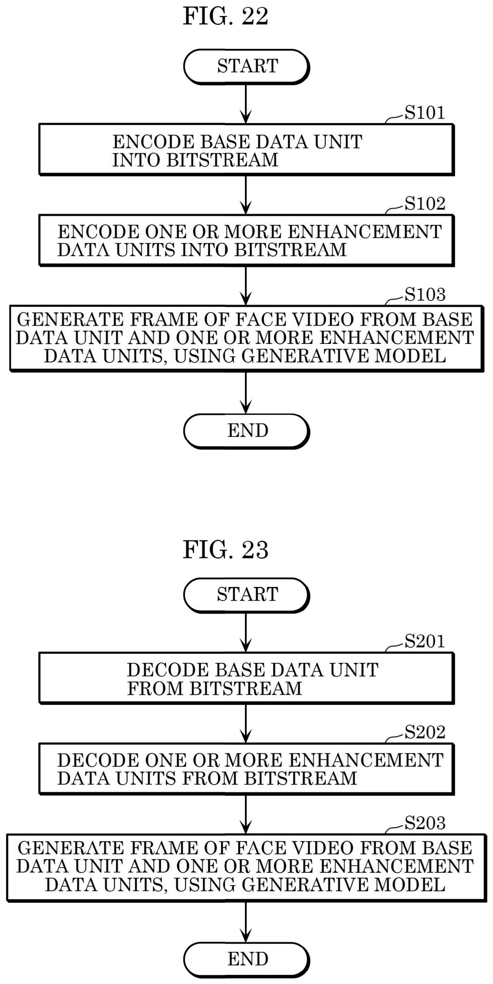

   FIG. 22 is a flow chart illustrating an operation example performed by the encoder according to the embodiment.
[FIG. 23]
   FIG. 23 is a flow chart illustrating an operation example performed by the decoder according to the embodiment.
[FIG. 24]

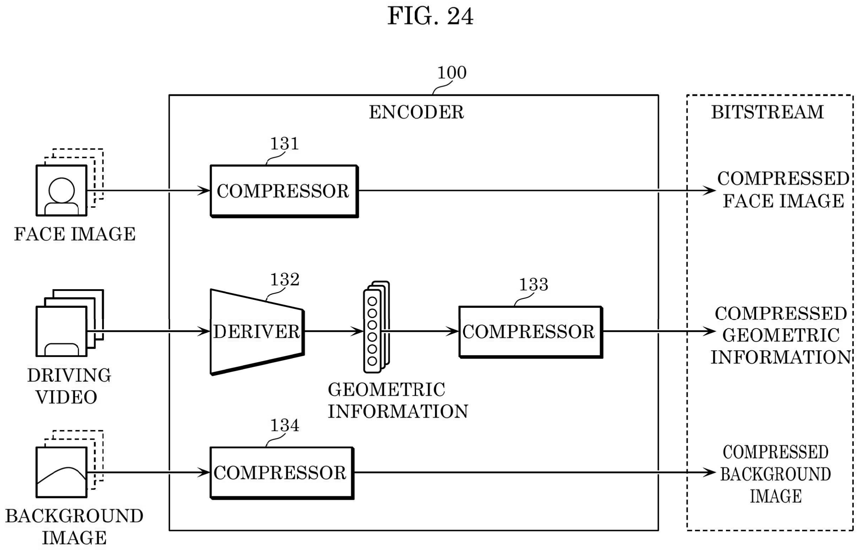

   FIG. 24 is a block diagram illustrating yet another configuration example of the encoder according to the embodiment.
[FIG. 25]

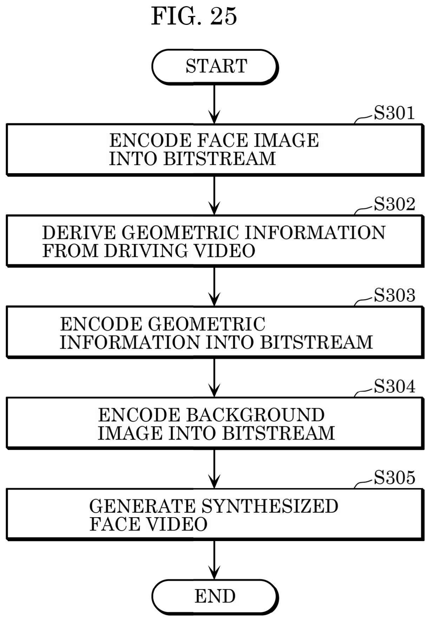

   FIG. 25 is a flow chart illustrating another operation example performed by the encoder according to the embodiment.
[FIG. 26]

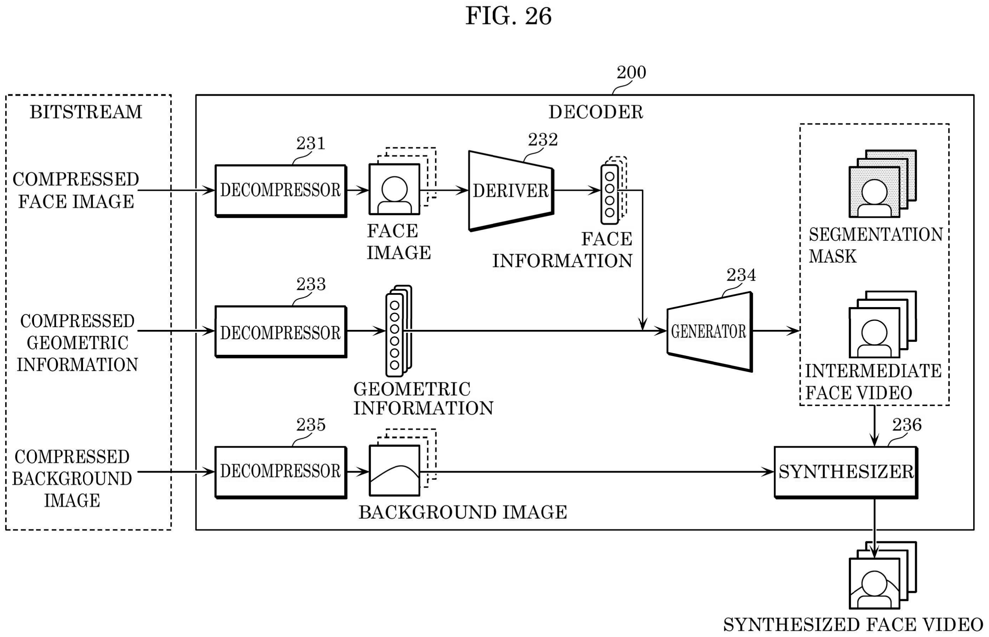

   FIG. 26 is a block diagram illustrating yet another configuration example of the decoder according to the embodiment.
[FIG. 27]

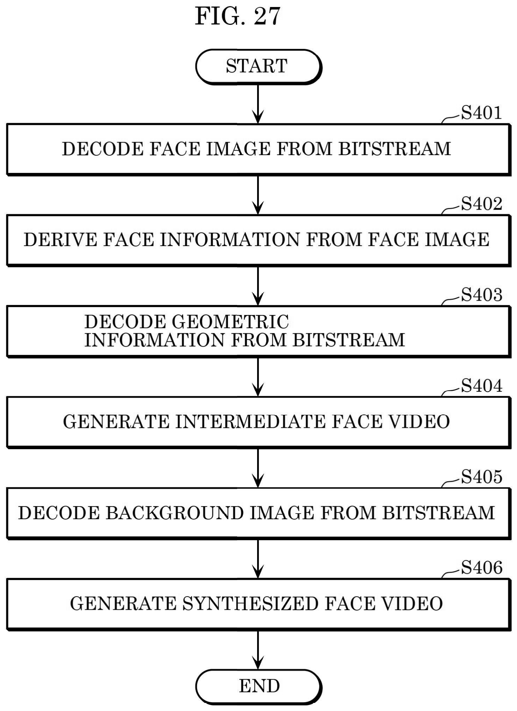

   FIG. 27 is a flow chart illustrating another operation example performed by the decoder according to the embodiment.
[FIG. 28]

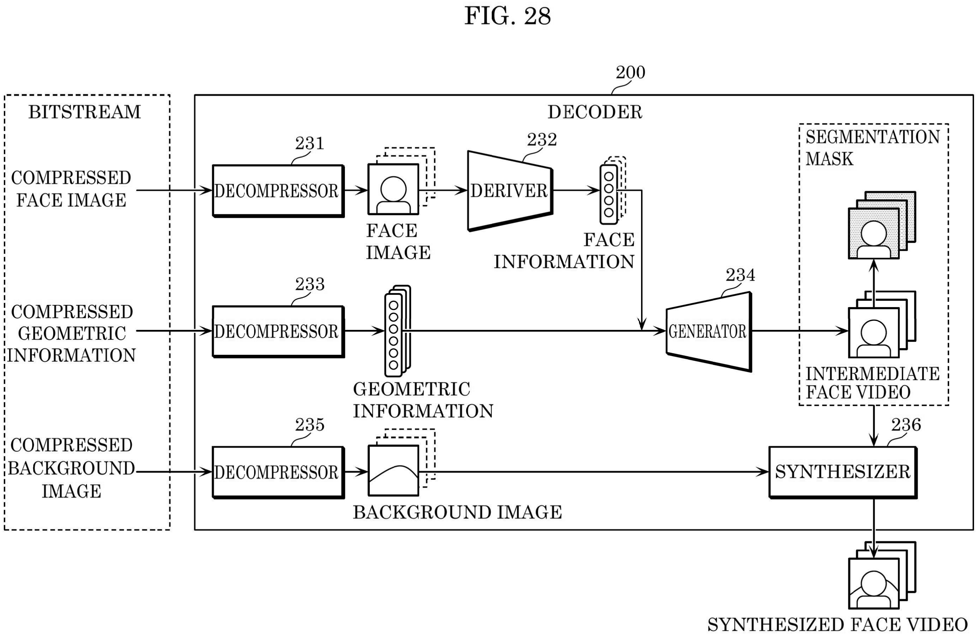

   FIG. 28 is a block diagram illustrating yet another configuration example of the decoder according to the embodiment.
[FIG. 29]

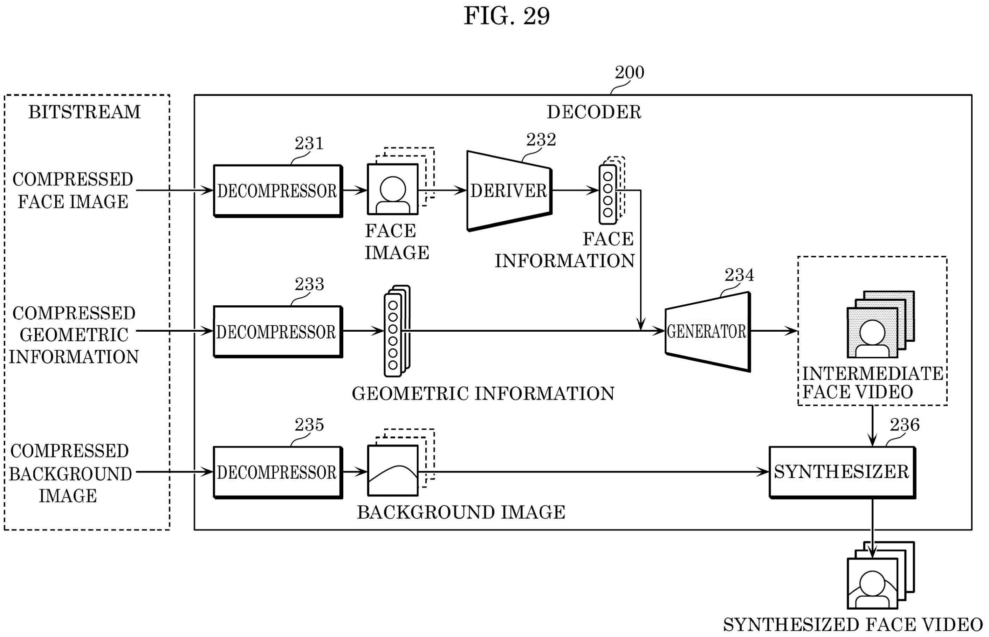

   FIG. 29 is a block diagram illustrating yet another configuration example of the decoder according to the embodiment.
[FIG. 30]

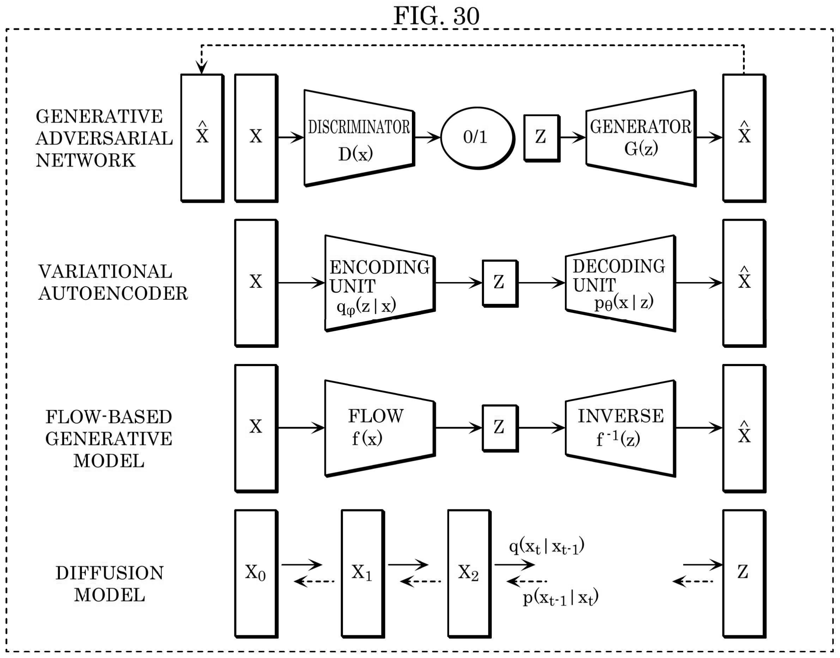

   FIG. 30 is a diagram illustrating an example of different neural networks applicable as a generative model.
[FIG. 31]

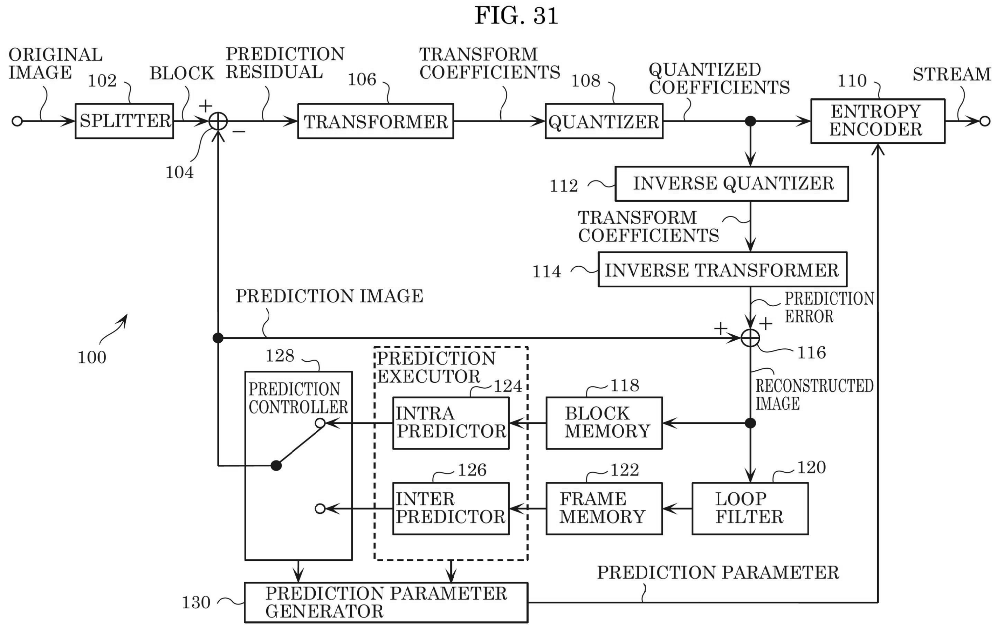

   FIG. 31 is a block diagram illustrating a configuration example for the encoder according to the embodiment to encode a video.
[FIG. 32]

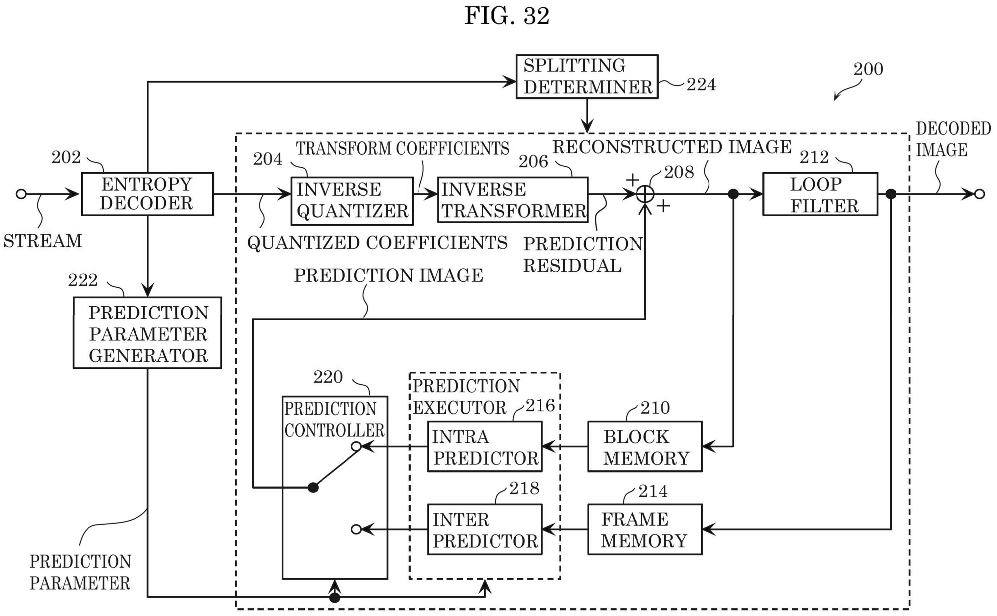

   FIG. 32 is a block diagram illustrating a configuration example for the decoder according to the embodiment to decode a video.
[FIG. 33]

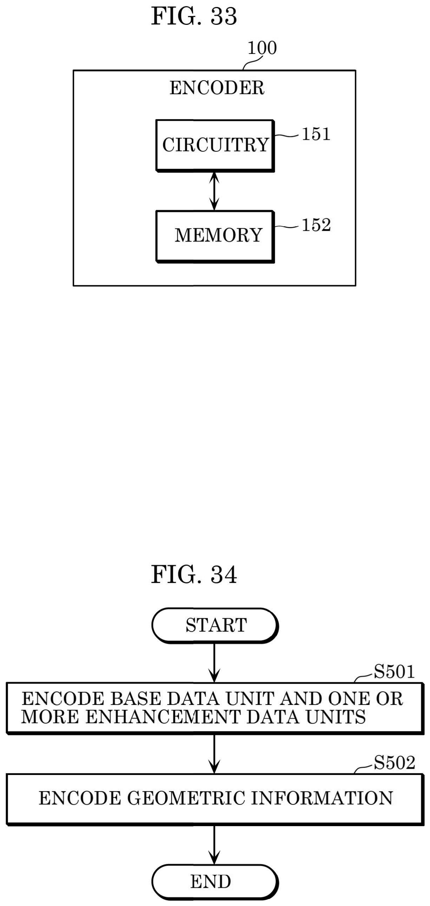

   FIG. 33 is a block diagram illustrating an implementation example of the encoder according to the embodiment.
[FIG. 34]
   FIG. 34 is a flow chart illustrating a basic operation example performed by the encoder according to the embodiment.
[FIG. 35]

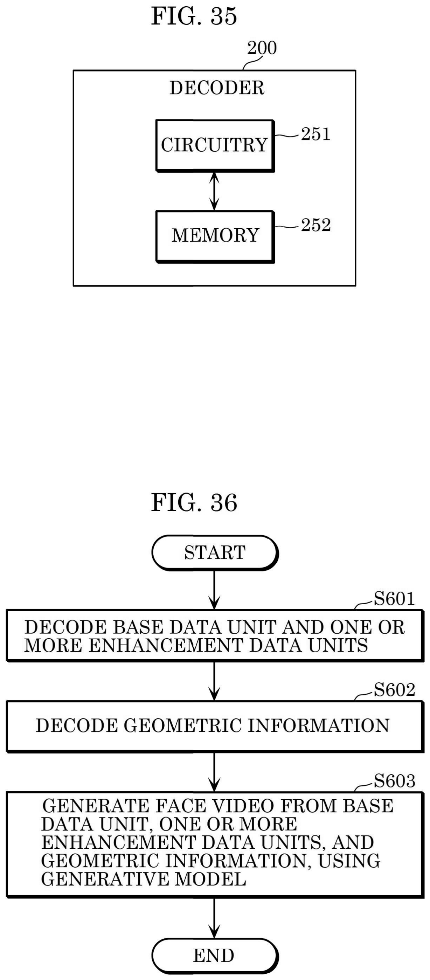

   FIG. 35 is a block diagram illustrating an implementation example of the decoder according to the embodiment.
[FIG. 36]
   FIG. 36 is a flow chart illustrating a basic operation example performed by the decoder according to the embodiment.
[FIG. 37]

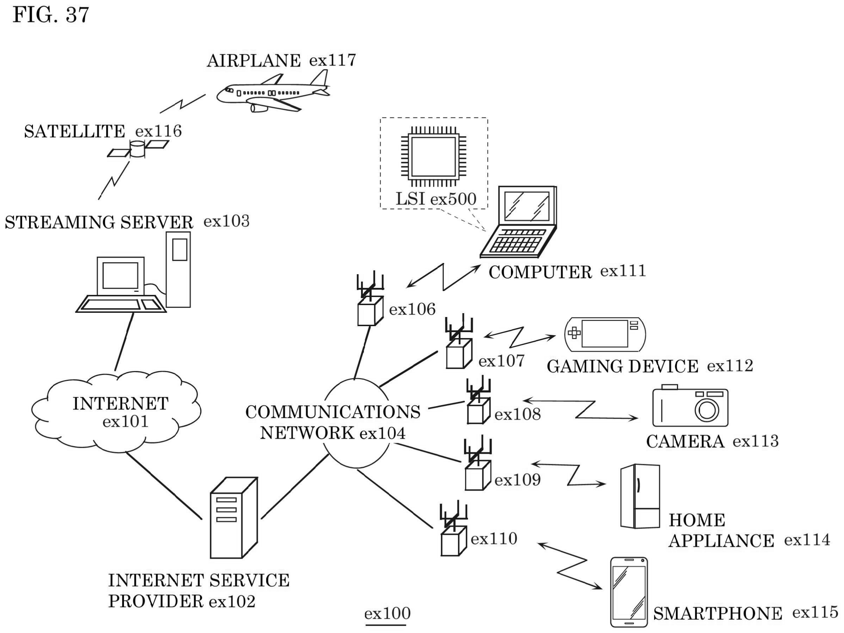

   FIG. 37 is a diagram illustrating an overall configuration of a content providing system for implementing a content distribution service.
[FIG. 38]

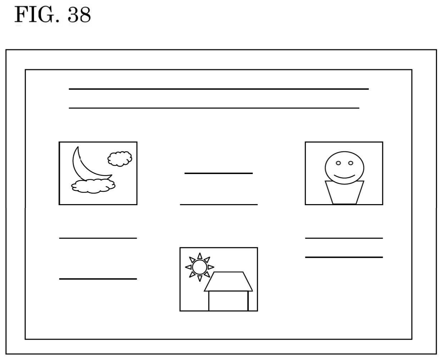

   FIG. 38 is a diagram illustrating an example of a display screen of a web page.
[FIG. 39]

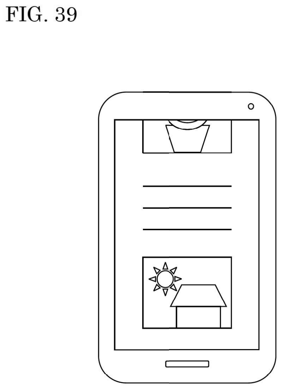

   FIG. 39 is a diagram illustrating an example of a display screen of a web page.
[FIG. 40]

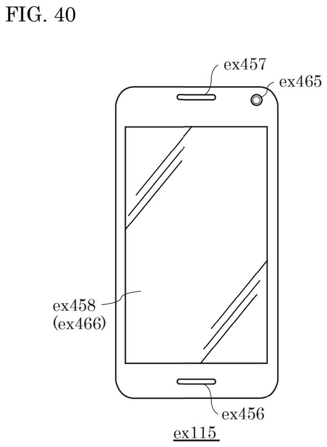

   FIG. 40 is a diagram illustrating one example of a smartphone.
[FIG. 41]

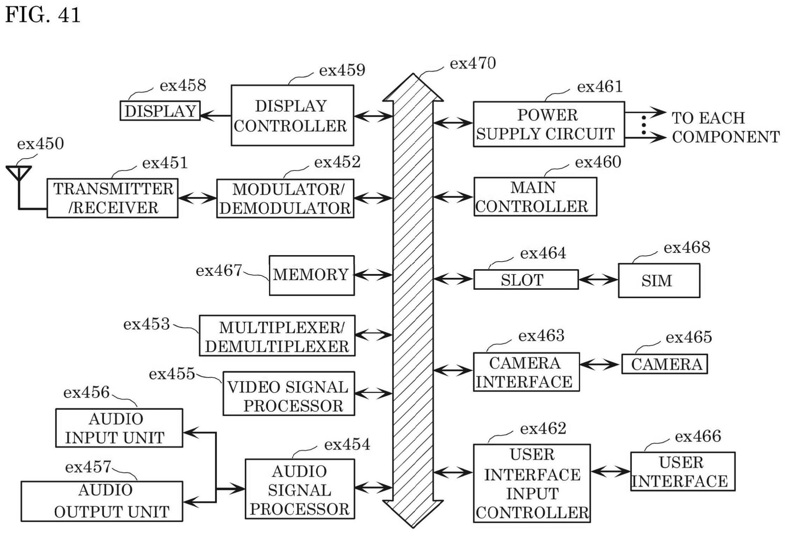

   FIG. 41 is a block diagram illustrating an example of a configuration of a smartphone.

### [Description of Embodiments]

### [Introduction]

For example, in video conferencing, etc., an encoder encodes a video including a face into a bitstream. A decoder then decodes the video from the bitstream.

In order to reduce the code amount, the encoder may encode a face image at the first frame and encode, for each of frames, geometric information indicating geometric attributes in a region including the face. The decoder may then decode the face image at the first frame and decode the geometric information for each of the frames. The decoder may then reconstruct the face image for each of the frames based on the face image decoded at the first frame and the geometric information decoded for each of the frames.

Here, for example, the geometric attributes correspond to dynamic attributes, and may be represented by a group of points such as facial landmarks or may be represented by a polygon model for representing the shape of an object using a combination of polygons. Moreover, the geometric attributes may be represented by another geometric model. Moreover, the geometric attributes may be represented by the locations of parts of the face.

It is inferred that the code amount of the geometric information is lower than the code amount of the face image. Accordingly, by encoding and decoding the geometric information for each of the frames, it is possible to reconstruct the face video using a code amount lower than a code amount in encoding and decoding the face image for each of the frames.

However, the code amount corresponding to the first frame may be increased by encoding and decoding the face image at the first frame. Furthermore, delay may occur.

In view of the above, a decoder of Example 1 includes memory and circuitry coupled to the memory. Using the memory, the circuitry: decodes, from a bitstream, a base data unit of a face image related to a face video and one or more enhancement data units of the face image; decodes, from the bitstream, geometric information corresponding to each of frames of the face video and indicating geometric attributes within a region including a face of a person; and generates the face video from the base data unit, the one or more enhancement data units, and the geometric information, using a generative model, in the bitstream, the base data unit is added to a data set corresponding to a first frame that is a frame of the face video, and in the bitstream, the one or more enhancement data units are added to one or more data sets corresponding to one or more second frames that are one or more frames of the face video and follow the first frame.

With this, it may be possible to separately decode the base data unit and one or more enhancement data units that are related to the face image, in frames. Accordingly, it may be possible to reduce the code amount corresponding to one frame. Accordingly, it may be possible to reduce delay.

Moreover, a decoder of Example 2 may be the decoder of Example 1, in which the circuitry decodes, from a header, control information regarding a control of at least one of face image data units that are the base data unit and the one or more enhancement data units.

With this, in the reconstruction of the face video, according to the control information, it may be possible to apply an appropriate process to the face image data.

Moreover, a decoder of Example 3 may be the decoder of Example 2, in which the control information includes presence information indicating whether a face image data unit is included in an access unit controlled by the header. The face image data unit is one of the face image data units.

With this, in the reconstruction of the face video, according to the control information, it may be possible to identify whether the face image data is included in the access unit. Accordingly, it may be possible to apply an appropriate process to the face image data.

Moreover, a decoder of Example 4 may be the decoder of Example 2 or 3, in which when a face image data unit is included in an access unit controlled by the header, the control information includes type information regarding whether the face image data unit is the base data unit or an enhancement data unit, the face image data unit being one of the face image data units, the enhancement data unit being one of the one or more enhancement data units, when the access unit includes the base data unit, the type information indicates that the face image data unit included in the access unit is the base data unit and continues to be used until a next base data unit, and when the access unit includes the enhancement data unit, the type information indicates that the face image data unit included in the access unit is the enhancement data unit and is used together with the base data unit.

With this, in the reconstruction of the face video, according to the control information, it may be possible to identify whether the face image data is the base data unit or the enhancement data unit. According to whether the face image data is the base data unit or the enhancement data unit, it may be possible to apply an appropriate process to the face image data.

Moreover, a decoder of Example 5 may be the decoder of any one of Examples 2 to 4, in which when a face image data unit is included in an access unit controlled by the header, the control information includes application information indicating whether the face image data unit is applicable to generate and display a frame corresponding to the access unit among the frames of the face video. The face image data unit is one of the face image data units.

With this, in the reconstruction of the face video, according to the control information, it may be possible to appropriately control whether to apply, to a frame of the face video, the face image data added to the data corresponding to the frame.

Moreover, a decoder of Example 6 may be the decoder of any one of Examples 1 to 5, in which each of the base data unit and the one or more enhancement data units is represented by a vector indicating a facial feature included in the face image.

With this, it may be possible to reduce the code amount related to the face image. Accordingly, it may be possible to reduce delay.

Moreover, a decoder of Example 7 may be the decoder of any one of Examples 1 to 5, in which each of the base data unit and the one or more enhancement data units is represented by an image related to the face image.

With this, in the reconstruction of the face video, it may be possible to appropriately reflect each of the base data unit and the enhancement data units related to the face image to the frame of the face video as image data.

Moreover, a decoder of Example 8 may be the decoder of any one of Examples 1 to 7, in which the circuitry inputs the base data unit, at least one of the one or more enhancement data units, and the geometric information to the generative model to generate a frame of the face video.

With this, it may be possible to skip a process of generating an intermediate image from the base data unit and the enhancement data units related to the face image. Accordingly, it may be possible to simplify the process of generating the face video.

Moreover, a decoder of Example 9 may be the decoder of any one of Examples 1 to 7, in which the circuitry generates an intermediate image from the base data unit and at least one of the one or more enhancement data units, and inputs the intermediate image and the geometric information to the generative model to generate a frame of the face video.

With this, it may be possible to appropriately generate an intermediate image related to the face image from the base data unit and the enhancement data units related to the face image. It may be possible to appropriately reflect the intermediate image related to the face image to the frame of the face video.

Moreover, a decoder of Example 10 may be the decoder of any one of Examples 1 to 7, in which the circuitry decodes an enhancement data unit using the base data unit as reference, and inputs the enhancement data unit and the geometric information to the generative model to generate a frame of the face video. The enhancement data unit is one of the one or more enhancement data units.

With this, it may be possible to efficiently decode the enhancement data unit that has accuracy higher than that of the base data unit. It may be possible to generate the frame of the face video with high accuracy using the enhancement data unit of high accuracy.

Moreover, a decoder of Example 11 may be the decoder of any one of Examples 1 to 9, in which the base data unit is data of part of a face included in the face image, and an enhancement data unit is data of other part of the face included in the face image. The enhancement data unit is one of the one or more enhancement data units.

With this, it may be possible to separately decode the face image in parts without performing a complicated process.

Moreover, a decoder of Example 12 may be the decoder of any one of Examples 1 to 9, in which the base data unit is data in a first frequency range of the face image, and an enhancement data unit is data in a second frequency range higher than the first frequency range of the face image. The enhancement data unit is one of the one or more enhancement data units.

With this, it may be possible to decode the low-frequency component data of the face image as the base data unit, and decode the high-frequency component data of the face image as the enhancement data unit. In the reconstruction of the face video, it may be possible to apply the low-frequency component data to generate the first frame of the face video, and apply both the low-frequency component data and the high-frequency component data to generate the second frame of the face video. Accordingly, it may be possible to cause less discomfort in the face video while reducing delay.

Moreover, a decoder of Example 13 may be the decoder of any one of Examples 1 to 10, in which the base data unit corresponds to a first image that (i) is related to the face image and (ii) has a first resolution, and an enhancement data unit corresponds to a second image that (i) is related to the face image, (ii) is decoded using the first image as reference, and (iii) has a second resolution higher than the first resolution. The enhancement data unit is one of the one or more enhancement data units.

With this, it may be possible to decode the face image with low resolution as the base data unit, and decodes the face image with high resolution as the enhancement data unit. In the reconstruction of the face video, it may be possible to apply the face image with low resolution to generate the first frame of the face video, and apply the face image with high resolution to generate the second frame of the face video. Accordingly, it may be possible to cause less discomfort in the face video while reducing delay.

Moreover, a decoder of Example 14 may be the decoder of any one of Examples 1 to 10, in which the base data unit corresponds to a first image that (i) is related to the face image and (ii) is decoded with a first quantization step size, and an enhancement data unit corresponds to a second image that (i) is related to the face image and (ii) is decoded with a second quantization step size finer than the first quantization step size using the first image as reference. The enhancement data unit is one of the one or more enhancement data units.

With this, it may be possible to decode the rough face image as the base data unit, and decodes the fine face image as the enhancement data unit. In the reconstruction of the face video, it may be possible to apply the rough face image to generate the first frame of the face video, and apply the fine face image to generate the second frame of the face video. Accordingly, it may be possible to cause less discomfort in the face video while reducing delay.

Moreover, a decoder of Example 15 may be the decoder of any one of Examples 2 to 5, in which the control information includes identification information for identifying each of the one or more enhancement data units.

With this, in the reconstruction of the face video, according to the control information, it may be possible to identify each enhancement data unit. Accordingly, it may be possible to individually specify each enhancement data unit, and control application of each enhancement data unit.

Moreover, a decoder of Example 16 may be the decoder of any one of Examples 2 to 5 and 15, in which the control information includes total number information (i) included in the header of an access unit including the base data unit and (ii) indicating a total number of the one or more enhancement data units.

With this, in the reconstruction of the face video, according to the control information, it may be possible to identify the total number of one or more enhancement data units. Accordingly, according to the total number of one or more enhancement data units, it may be possible to efficiently determine one or more enhancement data units available for the reconstruction of the face video.

Moreover, a decoder of Example 17 may be the decoder of any one of Examples 2 to 5, 15, and 16, in which the control information includes specification information (i) included in the header of an access unit including the base data unit and (ii) for specifying an enhancement data unit that is applicable to generate and display a second frame corresponding to an access unit including the enhancement data unit. The enhancement data unit is among the one or more enhancement data units. The second frame is among the one or more second frames.

With this, in the reconstruction of the face video, according to the control information, it may be possible to appropriately specify the enhancement data unit applicable to generate and display the frame of the face video.

Moreover, a decoder of Example 18 may be the decoder of any one of Examples 1 to 17, in which the circuitry decodes at least one control parameter for controlling a stream buffer at which the bitstream is stored in the memory. The at least one control parameter is for controlling a buffer size of the stream buffer to be smaller than or equal to a reference size and an initial delay time at start of a decoding process to be shorter than or equal to a reference delay time.

With this, it is possible to reduce the resources for decoding and shorten the delay time.

Moreover, an encoder of Example 19 includes memory and circuitry coupled to the memory. Using the memory, the circuitry: encodes, into a bitstream, a base data unit of a face image related to a face video and one or more enhancement data units of the face image; and encodes, into the bitstream, geometric information corresponding to each of frames of the face video and indicating geometric attributes within a region including a face of a person, in the bitstream, the base data unit is added to a data set corresponding to a first frame that is a frame of the face video, and in the bitstream, the one or more enhancement data units are added to one or more data sets corresponding to one or more second frames that are one or more frames of the face video and follow the first frame.

With this, it may be possible to separately encode the base data unit and one or more enhancement data units that are related to the face image, in frames. Accordingly, it may be possible to reduce the code amount corresponding to one frame. Accordingly, it may be possible to reduce delay.

Moreover, an encoder of Example 20 may be the encoder of Example 19, in which the circuitry encodes, into a header, control information regarding a control of at least one of face image data units that are the base data unit and the one or more enhancement data units.

With this, in the reconstruction of the face video, according to the control information, it may be possible to apply an appropriate process to the face image data.

Moreover, an encoder of Example 21 may be the encoder of Example 20, in which the control information includes presence information indicating whether a face image data unit is included in an access unit controlled by the header. The face image data unit is one of the face image data units.

With this, in the reconstruction of the face video, according to the control information, it may be possible to identify whether the face image data is included in the access unit. Accordingly, it may be possible to apply an appropriate process to the face image data.

Moreover, an encoder of Example 22 may be the encoder of Example 20 or 21, in which when a face image data unit is included in an access unit controlled by the header, the control information includes type information regarding whether the face image data unit is the base data unit or an enhancement data unit, the face image data unit being one of the face image data units, the enhancement data unit being one of the one or more enhancement data units, when the access unit includes the base data unit, the type information indicates that the face image data unit included in the access unit is the base data unit and continues to be used until a next base data unit, and when the access unit includes the enhancement data unit, the type information indicates that the face image data unit included in the access unit is the enhancement data unit and is used together with the base data unit.

With this, in the reconstruction of the face video, according to the control information, it may be possible to identify whether the face image data is the base data unit or the enhancement data unit. According to whether the face image data is the base data unit or the enhancement data unit, it may be possible to apply an appropriate process to the face image data.

Moreover, an encoder of Example 23 may be the encoder of any one of Examples 20 to 22, in which when a face image data unit is included in an access unit controlled by the header, the control information includes application information indicating whether the face image data unit is applicable to generate and display a frame corresponding to the access unit among the frames of the face video. The face image data unit is one of the face image data units.

With this, in the reconstruction of the face video, according to the control information, it may be possible to appropriately control whether to apply, to a frame of the face video, the face image data added to the data corresponding to the frame.

Moreover, an encoder of Example 24 may be the encoder of any one of Examples 19 to 23, in which each of the base data unit and the one or more enhancement data units is represented by a vector indicating a facial feature included in the face image.

With this, it may be possible to reduce the code amount related to the face image. Accordingly, it may be possible to reduce delay.

Moreover, an encoder of Example 25 may be the encoder of any one of Examples 19 to 23, in which each of the base data unit and the one or more enhancement data units is represented by an image related to the face image.

With this, in the reconstruction of the face video, it may be possible to appropriately reflect each of the base data unit and the enhancement data units related to the face image to the frame of the face video as image data.

Moreover, an encoder of Example 26 may be the encoder of any one of Examples 19 to 25, in which the circuitry derives and encodes, as the base data unit, data of part of a face included in the face image, and derives and encodes, as an enhancement data unit, data of other part of the face included in the face image. The enhancement data unit is one of the one or more enhancement data units.

With this, it may be possible to separately encode the face image in parts without performing a complicated process.

Moreover, an encoder of Example 27 may be the encoder of any one of Examples 19 to 25, in which the circuitry derives and encodes, as the base data unit, data in a first frequency range of the face image, and derives and encodes, as an enhancement data unit, data in a second frequency range higher than the first frequency range of the face image. The enhancement data unit is one of the one or more enhancement data units.

With this, it may be possible to encode the low-frequency component data of the face image as the base data unit, and encodes the high-frequency component data of the face image as the enhancement data unit. In the reconstruction of the face video, it may be possible to apply the low-frequency component data to generate the first frame of the face video, and apply both the low-frequency component data and the high-frequency component data to generate the second frame of the face video. Accordingly, it may be possible to cause less discomfort in the face video while reducing delay.

Moreover, an encoder of Example 28 may be the encoder of any one of Examples 19 to 25, in which the circuitry encodes, as the base data unit, a first image that (i) is related to the face image and (ii) has a first resolution, and encodes, as the base data unit, a second image that (i) is related to the face image, (ii) is encoded using the first image as reference, and (iii) has a second resolution higher than the first resolution.

With this, it may be possible to encode the face image with low resolution as the base data unit, and encodes the face image with high resolution as the enhancement data unit. In the reconstruction of the face video, it may be possible to apply the face image with low resolution to generate the first frame of the face video, and apply the face image with high resolution to generate the second frame of the face video. Accordingly, it may be possible to cause less discomfort in the face video while reducing delay.

Moreover, a decoding method of Example 29 includes: decoding, from a bitstream, a base data unit of a face image related to a face video and one or more enhancement data units of the face image; decoding, from the bitstream, geometric information corresponding to each of frames of the face video and indicating geometric attributes within a region including a face of a person; and generating the face video from the base data unit, the one or more enhancement data units, and the geometric information, using a generative model, in which in the bitstream, the base data unit is added to a data set corresponding to a first frame that is a frame of the face video, and in the bitstream, the one or more enhancement data units are added to one or more data sets corresponding to one or more second frames that are one or more frames of the face video and follow the first frame.

With this, it may be possible to separately decode the base data unit and one or more enhancement data units that are related to the face image, in frames. Accordingly, it may be possible to reduce the code amount corresponding to one frame. Accordingly, it may be possible to reduce delay.

Moreover, an encoding method of Example 30 includes: encoding, into a bitstream, a base data unit of a face image related to a face video and one or more enhancement data units of the face image; and encoding, into the bitstream, geometric information corresponding to each of frames of the face video and indicating geometric attributes within a region including a face of a person, in which in the bitstream, the base data unit is added to a data set corresponding to a first frame that is a frame of the face video, and in the bitstream, the one or more enhancement data units are added to one or more data sets corresponding to one or more second frames that are one or more frames of the face video and follow the first frame.

With this, it may be possible to separately encode the base data unit and one or more enhancement data units that are related to the face image, in frames. Accordingly, it may be possible to reduce the code amount corresponding to one frame. Accordingly, it may be possible to reduce delay.

Furthermore, these general or specific aspects may be implemented using a system, an apparatus, a method, an integrated circuit, a computer program, or a non-transitory computer readable medium such as a CD-ROM, or any combination of systems, apparatuses, methods, integrated circuits, computer programs, or media.

### [Definitions of Terms]

The respective terms may be defined as indicated below as examples.

### (1) image

An image is a data unit configured with a set of pixels, is a picture or includes blocks smaller than a picture. Images include a still image in addition to a video.

### (2) picture

A picture is an image processing unit configured with a set of pixels, and is also referred to as a frame or a field.

### (3) block

A block is a processing unit which is a set of a particular number of pixels. The block is also referred to as indicated in the following examples. The shapes of blocks are not limited. Examples include a rectangle shape of M×N pixels and a square shape of M×M pixels for the first place, and also include a triangular shape, a circular shape, and other shapes.

### (examples of blocks)

- slice/tile/brick
- CTU / super block / basic splitting unit
- VPDU / processing splitting unit for hardware
- CU / processing block unit / prediction block unit (PU) / orthogonal transform block unit (TU) / unit
- sub-block

### (4) pixel/sample

A pixel or sample is a smallest point of an image. Pixels or samples include not only a pixel at an integer position but also a pixel at a sub-pixel position generated based on a pixel at an integer position.

### (5) pixel value / sample value

A pixel value or sample value is an eigen value of a pixel. Pixel or sample values naturally include a luma value, a chroma value, an RGB gradation level and also covers a depth value, or a binary value of 0 or 1.

### (6) flag

A flag indicates one or more bits, and may be, for example, a parameter or index represented by two or more bits. Alternatively, the flag may indicate not only a binary value represented by a binary number but also a multiple value represented by a number other than the binary number.

### (7) signal

A signal is the one symbolized or encoded to convey information. Signals include a discrete digital signal and an analog signal which takes a continuous value.

### (8) stream/bitstream

A stream or bitstream is a digital data string or a digital data flow. A stream or bitstream may be one stream or may be configured with a plurality of streams having a plurality of hierarchical layers. A stream or bitstream may be transmitted in serial communication using a single transmission path, or may be transmitted in packet communication using a plurality of transmission paths.

### (9) difference

In the case of scalar quantity, it is only necessary that a simple difference (x - y) and a difference calculation be included. Differences include an absolute value of a difference (|x - y|), a squared difference (x^2 - y^2), a square root of a difference (√(x - y)), a weighted difference (ax - by: a and b are constants), an offset difference (x - y + a: a is an offset).

### (10) sum

In the case of scalar quantity, it is only necessary that a simple sum (x + y) and a sum calculation be included. Sums include an absolute value of a sum (|x + y|), a squared sum (x^2 + y^2), a square root of a sum (√(x + y)), a weighted difference (ax + by: a and b are constants), an offset sum (x + y + a: a is an offset).

### (11) based on

A phrase "based on something" means that a thing other than the something may be considered. In addition, "based on" may be used in a case in which a direct result is obtained or a case in which a result is obtained through an intermediate result.

### (12) used, using

A phrase "something used" or "using something" means that a thing other than the something may be considered. In addition, "used" or "using" may be used in a case in which a direct result is obtained or a case in which a result is obtained through an intermediate result.

### (13) prohibit, forbid

The term "prohibit" or "forbid" can be rephrased as "does not permit" or "does not allow". In addition, "being not prohibited/forbidden" or "being permitted/allowed" does not always mean "obligation".

### (14) limit, restriction/restrict/restricted

The term "limit" or "restriction/restrict/restricted" can be rephrased as "does not permit/allow" or "being not permitted/allowed". In addition, "being not prohibited/forbidden" or "being permitted/allowed" does not always mean "obligation". Furthermore, it is only necessary that part of something be prohibited/forbidden quantitatively or qualitatively, and something may be fully prohibited/forbidden.

### (15) chroma

An adjective, represented by the symbols Cb and Cr, specifying that a sample array or single sample is representing one of the two color difference signals related to the primary colors. The term chroma may be used instead of the term chrominance.

### (16) luma

An adjective, represented by the symbol or subscript Y or L, specifying that a sample array or single sample is representing the monochrome signal related to the primary colors. The term luma may be used instead of the term luminance.

### [Notes Related to the Descriptions]

In the drawings, same reference numbers indicate same or similar components. The sizes and relative locations of components are not necessarily drawn by the same scale.

Hereinafter, embodiments will be described with reference to the drawings. Note that the embodiments described below each show a general or specific example. The numerical values, shapes, materials, components, the arrangement and connection of the components, steps, the relation and order of the steps, etc., indicated in the following embodiments are mere examples, and are not intended to limit the scope of the claims.

Embodiments of an encoder and a decoder will be described below. The embodiments are examples of an encoder and a decoder to which the processes and/or configurations presented in the description of aspects of the present disclosure are applicable. The processes and/or configurations can also be implemented in an encoder and a decoder different from those according to the embodiments. For example, regarding the processes and/or configurations as applied to the embodiments, any of the following may be implemented:
(1) Any of the components of the encoder or the decoder according to the embodiments presented in the description of aspects of the present disclosure may be substituted or combined with another component presented anywhere in the description of aspects of the present disclosure.
(2) In the encoder or the decoder according to the embodiments, discretionary changes may be made to functions or processes performed by one or more components of the encoder or the decoder, such as addition, substitution, removal, etc., of the functions or processes. For example, any function or process may be substituted or combined with another function or process presented anywhere in the description of aspects of the present disclosure.
(3) In methods implemented by the encoder or the decoder according to the embodiments, discretionary changes may be made such as addition, substitution, and removal of one or more of the processes included in the method. For example, any process in the method may be substituted or combined with another process presented anywhere in the description of aspects of the present disclosure.
(4) One or more components included in the encoder or the decoder according to embodiments may be combined with a component presented anywhere in the description of aspects of the present disclosure, may be combined with a component including one or more functions presented anywhere in the description of aspects of the present disclosure, and may be combined with a component that implements one or more processes implemented by a component presented in the description of aspects of the present disclosure.
(5) A component including one or more functions of the encoder or the decoder according to the embodiments, or a component that implements one or more processes of the encoder or the decoder according to the embodiments, may be combined or substituted with a component presented anywhere in the description of aspects of the present disclosure, with a component including one or more functions presented anywhere in the description of aspects of the present disclosure, or with a component that implements one or more processes presented anywhere in the description of aspects of the present disclosure.
(6) In methods implemented by the encoder or the decoder according to the embodiments, any of the processes included in the method may be substituted or combined with a process presented anywhere in the description of aspects of the present disclosure or with any corresponding or equivalent process.
(7) One or more processes included in methods implemented by the encoder or the decoder according to the embodiments may be combined with a process presented anywhere in the description of aspects of the present disclosure.
(8) The implementation of the processes and/or configurations presented in the description of aspects of the present disclosure is not limited to the encoder or the decoder according to the embodiments. For example, the processes and/or configurations may be implemented in a device used for a purpose different from the moving picture encoder or the moving picture decoder disclosed in the embodiments.

### [Configuration of Encoding and Decoding System]

FIG. 1 is a block diagram illustrating a configuration example of an encoding and decoding system according to an embodiment. The encoding and decoding system includes encoder 100 and decoder 200. In the present embodiment, the encoding and decoding system is used for face re-enactment.

The face re-enactment refers to the process of mapping the expressions and pose of one or more source persons to an image of one or more target persons, while simultaneously ensuring that the identity and attributes of the target person are being preserved. Face re-enactment techniques are being used in a wide variety of applications ranging from video conferencing to the entertainment sector. At present, there are numerous works that enhance photo-realistic representations through the introduction of various methods such as extraction of motion representations or projection of image features into a latent space.

For example, video conferencing applications comprise an encoder-decoder architecture. First, a driving video including one or more frames of a user corresponding to a source person is captured by encoder 100. Subsequently, the driving video is transmitted to decoder 200 on real-time communication. Decoder 200 reconstructs and displays a face video of a target person.

The face image of the target person may be transmitted from encoder 100 to decoder 200. The face image may be live feed from a camera, or may be represented by one or more pre-configured cartoonized avatars or by one or more pre-set source images including a face. Moreover, the face image may be selected by the user.

The face re-enactment techniques have been widely adopted within the entertainment industry, such as the production of advertisements, editing of movie scenes, and enhancements to music videos. In these applications, emotions, expressions, and pose in one or more driving videos are transferred to a target face while ensuring that the target's identity and appearance is preserved.

The person in the driving video and the target person may be the same person or different persons. The target person is not limited to a real person. A virtual person such as an avatar is possible.

With rising popularity and increased usage of various social media applications, face re-enactment techniques provide users with flexibility, convenience, and ease in generating uniquely customized representations of themselves to symbolize their feelings and personalities. Various face re-enactment techniques have been proposed taking into account scenarios where the driving video is real-time or pre-recorded. Moreover, output videos are generated to look natural without distortions. Moreover, users may be able to adjust the attributes of the output videos.

In the example of FIG. 1, encoder 100 obtains, as inputs, a face image of a target person and a driving video including frames, and encodes and compresses these information items into one or more bitstreams. The compressed bitstream is then transmitted to decoder 200 through a transmission channel such as a communication network or a recording medium. Finally, decoder 200 reconstructs a face video from the received bitstream.

For example, the face image is an image including a face, and can be also referred to as a fundamental image or an identity image. The face image represents static and visual characteristics for reconstructing the face video. The driving video is a video including a face, and a captured video by a camera. The driving video plays a role of giving motion to the face image. The bitstream is also referred to just as a stream. Moreover, the present disclosure is not limited to use of one bitstream. Multiple bitstreams may be used.

The person included in the face image and the person included in the driving video may be the same, or may be different.

It is to be noted that the encoding and decoding system according to the present embodiment is applicable to video conferencing, generation and editing of videos in the entertainment industry, social media, the e-commerce industry, etc. However, the applicable range is not limited to these.

### [Data Structure]

FIG. 2 is a diagram illustrating one example of a hierarchical structure of data in a stream. A stream includes, for example, a video sequence. As illustrated in (a) of FIG. 2, the video sequence includes a video parameter set (VPS), a sequence parameter set (SPS), a picture parameter set (PPS), supplemental enhancement information (SEI), and a plurality of pictures.

In a video having a plurality of layers, a VPS includes: a coding parameter which is common between some of the plurality of layers; and a coding parameter related to some of the plurality of layers included in the video or an individual layer.

An SPS includes a parameter which is used for a sequence, that is, a coding parameter which decoder 200 refers to in order to decode the sequence. For example, the coding parameter may indicate the width or height of a picture. It is to be noted that a plurality of SPSs may be present.

A PPS includes a parameter which is used for a picture, that is, a coding parameter which decoder 200 refers to in order to decode each of the pictures in the sequence. For example, the coding parameter may include a reference value for the quantization width which is used to decode a picture and a flag indicating application of weighted prediction. It is to be noted that a plurality of PPSs may be present. Each of the SPS and the PPS may be simply referred to as a parameter set.

As illustrated in (b) of FIG. 2, a picture may include a picture header and at least one slice. A picture header includes a coding parameter which decoder 200 refers to in order to decode the at least one slice.

As illustrated in (c) of FIG. 2 a slice includes a slice header and at least one brick. A slice header includes a coding parameter which decoder 200 refers to in order to decode the at least one brick.

As illustrated in (d) of FIG. 2, a brick includes at least one coding tree unit (CTU).

It is to be noted that a picture may not include any slice and may include a tile group instead of a slice. In this case, the tile group includes at least one tile. In addition, a brick may include a slice.

A CTU is also referred to as a super block or a basis splitting unit. As illustrated in (e) of FIG. 2, a CTU like this includes a CTU header and at least one coding unit (CU). A CTU header includes a coding parameter which decoder 200 refers to in order to decode the at least one CU.

A CU may be split into a plurality of smaller CUs. As illustrated in (f) of FIG. 2, a CU includes a CU header, prediction information, and residual coefficient information. Prediction information is information for predicting the CU, and the residual coefficient information is information indicating a prediction residual to be described later. Although a CU is basically the same as a prediction unit (PU) and a transform unit (TU), it is to be noted that, for example, an SBT to be described later may include a plurality of TUs smaller than the CU. In addition, the CU may be processed for each virtual pipeline decoding unit (VPDU) included in the CU. The VPDU is, for example, a fixed unit which can be processed at one stage when pipeline processing is performed in hardware.

It is to be noted that a stream may not include part of the hierarchical layers illustrated in FIG. 2. The order of the hierarchical layers may be exchanged, or any of the hierarchical layers may be replaced by another hierarchical layer. Here, a picture which is a target for a process which is about to be performed by a device such as encoder 100 or decoder 200 is referred to as a current picture. A current picture means a current picture to be encoded when the process is an encoding process, and a current picture means a current picture to be decoded when the process is a decoding process. Likewise, for example, a CU or a block of CUs which is a target for a process which is about to be performed by a device such as encoder 100 or decoder 200 is referred to as a current block. A current block means a current block to be encoded when the process is an encoding process, and a current block means a current block to be decoded when the process is a decoding process.

Here, a region where parameters for use in encoding and decoding are described can be referred to as a header. For example, the header is a region including SEI. The header can further include VPS, SPS, PPS, SEI, a picture header, a slice header, a CTU header, and a CU header.

Moreover, for example, a picture can be classified as any of types including I picture, P picture, and B picture. I picture is an intra-predicted picture, and is also referred to as an intra picture. I picture is encoded and decoded without referring to another picture. P picture is a uni-predicted picture, and can be encoded and decoded using one other picture as reference. B picture is a bi-predicted picture, and can be encoded and decoded using two other pictures as reference.

Moreover, a moving picture can include multiple GOPs (groups of pictures). GOP means a group of pictures. GOP includes one or more I pictures. GOP may include one or more P pictures, or one or more B pictures. GOP may be a unit for which video editing, random access, and the like are allowed. GOP may include a certain number of pictures, or may include, as a GOP structure, the determined arrangement order of I pictures, P pictures, and B pictures.

### [Configuration and Process of Encoding and Decoding]

FIG. 3 is a block diagram illustrating a configuration example of encoder 100 according to the present embodiment. In this example, encoder 100 generates a bitstream including a compressed face image, a compressed driving video, and a compressed background image, from a face image, a driving video, and a background image. Encoder 100 includes compressor 131, deriver 132, compressor 133, and compressor 134. For example, these components are each an electric circuit that performs information processing. Two or more of compressor 131, compressor 133, and compressor 134 may be integrated.

Here, the face image includes a face of a target person. Each of face images including the face of the target person may be used as the face image. Moreover, each of driving frames of the driving video includes a face of a source person. Moreover, each of background images may be used as the background image.

First, compressor 131 encodes the face image into the bitstream to compress the face image. Moreover, deriver 132 derives geometric information indicating geometric attributes of a region including the face of the source person, from each driving frame in the driving video directly captured by a camera. Compressor 133 compresses the geometric information by encoding the geometric information into the bitstream. Moreover, compressor 134 compresses the background image by encoding the background image into the bitstream.

Here, for example, the geometric attributes correspond to dynamic attributes, and may be represented by a group of points such as facial landmarks, or may be represented by a polygon model for representing the shape of an object using a combination of polygons. Moreover, the geometric attributes may be represented by another geometric model. Moreover, the geometric attributes may be represented by the locations of parts of the face.

For example, both the geometric information and the background image are transmitted from encoder 100 for each of frames (at every time instance). Moreover, for example, the face image is transmitted at the first frame (at the first time instance). The face image need not be transmitted for each frame. In particular, the face image need not be transmitted as long as the face image is the same as a face image in the previous frame.

In variations, deriver 132 may derive, for each frame, a segmentation mask indicating a foreground region and a background region in the driving frame, and compressor 133 may compress the segmentation mask by encoding the segmentation mask into the bitstream. The segmentation mask may be then transmitted to decoder 200. The segmentation mask of the driving frame corresponds to a segmentation mask of a frame in a face video to be reconstructed.

It is to be noted that the background image is not an essential element. Accordingly, encoder 100 need not include compressor 134, and the bitstream need not include the compressed background image.

FIG. 4 is a block diagram illustrating a configuration example of decoder 200 according to the present embodiment. Decoder 200 generates a face video from a bitstream. In this example, decoder 200 includes decompressor 231, deriver 232, decompressor 233, deriver 237, generator 234, and decompressor 235. For example, these components are each an electric circuit that performs information processing. Two or more of decompressor 231, decompressor 233, and decompressor 235 may be integrated.

Decompressor 231 decompresses the face image by decoding the face image from the bitstream. Deriver 232 then derives, from the face image, face information indicating facial attributes. Here, the facial attributes are facial static and visual attributes. The facial attributes can be also referred to as an identity.

Decompressor 233 decompresses the geometric information by decoding the geometric information from the bitstream for each of frames. Deriver 237 then derives a segmentation mask from the geometric information for each frame. The segmentation mask indicates a foreground region and a background region in the face video.

Decompressor 235 decodes, from the bitstream, the background image that is integrated into the face video.

Generator 234 receives, as inputs, the face information, the geometric information, the segmentation mask, and the background image, and generates a face video including frames. Specifically, generator 234 generates the face video from the face information, the geometric information, the segmentation mask, and the background image, using a generative model such as a neural network. With this, it is possible to reconstruct the face video while reducing the code amount.

For example, both the geometric information and the background image are transmitted to decoder 200 for each frame. Moreover, for example, the face image is transmitted in the first frame. The face image need not be transmitted for each frame. In particular, when the face image is not transmitted, a face image decoded at the previous frame may be used.

It is to be noted that the background image is not an essential element. Accordingly, decoder 200 need not include decompressor 235.

Moreover, decompressor 233 may decode the segmentation mask to use the decoded segmentation mask in generator 234. Moreover, the segmentation mask is not an essential element. Accordingly, decoder 200 need not include deriver 237. Moreover, the deriving of the face information may be omitted. Instead of the face information, the face image may be used to generate the face video. Accordingly, decoder 200 need not include deriver 232.

For example, generator 234 may generate the face video based on only the face image and the geometric information.

FIG. 5 is a conceptual diagram illustrating an example of a face image. As illustrated in this example, the face image is an image including a face.

FIG. 6 is a conceptual diagram illustrating an example of geometric attributes. In this example, the geometric attributes refer to facial landmarks. For example, geometric information indicating the geometric attributes is derived for each of frames of a driving video.

FIG. 7 is a conceptual diagram illustrating an example of a face video. As illustrated in this example, the face video is a video including a face. In the face video, for each of the frames, the geometric attributes of the frame are reflected in the face image. With this, motion is given to the face image.

As described above, the face image may be transmitted in the first frame and need not be transmitted in each subsequent frame. With this, it is possible to reduce the amount of bits. However, in the face re-enactment, a large fluctuation of buffer size may be caused by a large difference in amount of bits between the frames. Here, the buffer size is a buffer size of a stream buffer, and means a data size in the stream buffer.

FIG. 8 is a conceptual diagram illustrating a configuration example of data corresponding to each frame. For example, POC#0 means that picture order count (POC) is 0. In this example, the encoding order and the display order are the same, and the frames are encoded and decoded in the following order: POC#0, POC#1, POC#2, and POC#3. POC#0 may be the first frame in a sequence, i.e., a bitstream, or the first frame in GOP.

Moreover, in this example, data of the face image is encoded at the first frame. Moreover, the geometric information is encoded at each frame. The data size of the geometric information is smaller than the data size of the face image. Accordingly, for the first frame in which the face image is transmitted, the data size corresponding to the frame is large, whereas for each subsequent frame in which the face image is not transmitted, the data size corresponding to the frame is small. This may cause a large fluctuation of the buffer size, thereby preventing low-latency transmission.

For example, the buffer size of a coded picture buffer (CPB) is decreased to start decoding earlier, thereby achieving the low-latency transmission. However, when the data size of the first frame is large, it is difficult to decrease the buffer size.

FIG. 9 is a conceptual diagram illustrating a data size in a CPB buffer. Specifically, an example of buffer underflow that occurs in CPB is illustrated. Buffer underflow occurs when the buffer level reaches zero or below. In this case, full frame data is not available in the CPB buffer. Accordingly, a decoded image is not generated, resulting in delay in decoding.

Specifically, in this example, data for the first frame is insufficient at a time when the first frame is decoded since the data size of the first frame is large. This causes delay. In other words, a difference in data size between frames may cause delay. In other words, when a frame whose data size is larger than the data sizes of other frames is obtained, the buffer underflow is likely to occur. Accordingly, a smaller difference in data size between frames is better.

For example, encoder 100 may encode at least one control parameter for controlling a stream buffer at which a bitstream is stored in a memory of decoder 200. The stream buffer is, for example, a CPB. Decoder 200 may then decode the at least one control parameter. Decoder 200 may then control the stream buffer according to the at least one control parameter.

The at least one control parameter may include at least one parameter for specifying the buffer size of the stream buffer and an initial delay time at the start of the decoding process. The initial delay time at the start of the decoding process corresponds to a time when the bitstream data is obtained first from the stream buffer.

The at least one control parameter may be set to control the buffer size of the stream buffer to be smaller than or equal to the reference size and the initial delay time at the start of the decoding process to be shorter than or equal to the reference delay time. The reference size may be a size smaller than a normal size, and the reference delay time may be a delay time shorter than a normal delay time.

Moreover, the at least one control parameter may be set to control the buffer size of the stream buffer to be the smallest and the initial delay time at the start of the decoding process to be the shortest within a range where no buffer underflow occurs. In this case, the reference size may be regarded as the smallest size within the range where no buffer underflow occurs, and the reference delay time may be regarded as the shortest delay time within the range where no buffer underflow occurs.

The size of data retained in the stream buffer is reduced by reducing the buffer size of the stream buffer. The small buffer size is used to transmit and process data without occurrence of the buffer underflow, and thus data is processed with low latency. Accordingly, a smaller increase and decrease in transmission data size between frames is better.

FIG. 10 is a conceptual diagram illustrating another configuration example of data corresponding to each frame. In this example, data of a face image is separated into data units, and the data units are each transmitted in a different frame. Specifically, data of the face image is separated into a base data unit and one or more enhancement data units. The base data unit and the one or more enhancement data units each include a different content of the data of the face image.

For example, the base data unit corresponds to a picture also referred to as a base picture. The picture decoded and outputted from the base data unit provides a reference texture, and face pictures corresponding to frames of the face video can be generated from the reference texture.

For example, the enhancement data unit corresponds to a picture for use in fusion. The enhancement data unit may be a picture to be inputted to a generative model for generating the face video, such as a neural network. In other words, the enhancement data unit may be used as a driving picture for enhancing the face image represented by the base data unit.

The fusion may be performed by inputting, to the generative model, reconstructed data obtained by summing (adding) the base data unit and the enhancement data unit, or by inputting the base data unit and the enhancement data unit to the generative model.

In this example, the data of the face image is separated into a base data unit and three enhancement data units. At the final enhancement data unit in POC#3, the data of the face image is complete. After POC#3, the data of the face image is not transmitted anymore.

Here, the data of the face image is also referred to as face image data. The face image data may be data of the entire face image, the base data unit, or each of the one or more enhancement data units. The face image data also may be data reconstructed from the base data unit and at least one enhancement data unit among the one or more enhancement data units.

For example, after decoding the base data unit and the geometric information corresponding to POC#0, a frame corresponding to POC#0 is generated in the face video using the neural network from the base data unit and the geometric information corresponding to POC#0. The base data unit corresponding to POC#0 is also regarded as the face image data corresponding to POC#0.

Moreover, after decoding the enhancement data unit and the geometric information corresponding to POC#1, the enhancement data unit corresponding to POC#1 is added to the base data unit to reconstruct the face image data corresponding to POC#1. The face image data and the geometric information corresponding to POC#1 are used to generate the frame corresponding to POC#1 in the face video.

In generating the frame corresponding to POC#1 in the face video, not only the face image data corresponding to POC#1 but also the face image data corresponding to POC#0 may be inputted to the generative model. Alternatively, both the base data unit corresponding to POC#0 and the enhancement data unit corresponding to POC#1 may be inputted to the generative model.

Likewise, after decoding the enhancement data unit and the geometric information corresponding to POC#2, the enhancement data unit corresponding to POC#2 is added to the face image data unit corresponding to POC#1 to reconstruct the face image data corresponding to POC#2. The face image and the geometric information corresponding to POC#2 are used to generate the frame corresponding to POC#2 in the face video.

In generating the frame corresponding to POC#2 in the face video, not only the face image data corresponding to POC#2 but also the face image data corresponding to POC#0 may be inputted to the generative model, and the face image data corresponding to POC#1 also may be inputted to the generative model. Alternatively, the base data unit corresponding to POC#0, the enhancement data unit corresponding to POC#1, and the enhancement data unit corresponding to POC#2 may be inputted to the generative model.

In this example, an increase in data size for one frame is reduced. With this, it is possible to decrease the stream buffer and reduce the delay.

It is to be noted that, as illustrated in the example of FIG. 10, the base data unit and the one or more enhancement data units may be transmitted in POCs that are temporally continuous. With this, it may be possible to both reduce the maximum CPB buffer size and align all data units of the face image as quickly as possible.

When the enhancement data units are too few, i.e., the number of enhancement data units is too small, the maximum CPB buffer size is not reduced enough. In contrast, when the enhancement data units are too many, i.e., the number of enhancement data units is too large, it takes time for all data units of the face image to be aligned. The number of enhancement data units may be three. The number of enhancement data units may be determined by a user based on delay, image quality, and the like.

FIG. 11 is a conceptual diagram illustrating yet another configuration example of data corresponding to each frame. In this example, the face image data is separated into a base data unit and two enhancement data units. At the final enhancement data unit in POC#4, the face image data is complete.

The one or more enhancement data units may be transmitted in any order and in any frame based on delay, image quality, and the like.

It is to be noted that, as illustrated in the example of FIG. 11, the base data unit and the one or more enhancement data units may be transmitted in POCs that are not temporally continuous. With this, it may be possible to both reduce the maximum CPB buffer size and decrease the number of enhancement data units to reduce processing amount.

Moreover, the geometric information need not be transmitted for each of all the frames. For example, the geometric information need not be transmitted in the frame that transmits the base data unit. Moreover, the geometric information need not be transmitted in the frame that transmits the enhancement data unit. However, the face video with smooth motion may be generated by transmitting the geometric information for each of all the frames.

Moreover, control information regarding control of the face image data may be transmitted in a header such as SEI. For example, the control information may include presence information that is information indicating whether the face image data is included in the access unit. Such presence information may be included in the header of the access unit. It is to be noted that the access unit is a unit of data, and one access unit corresponds to one POC, i.e., one POC number.

Moreover, the control information may include type information that is information indicating whether the access unit includes the base data unit or the enhancement data unit. Such type information may be included in the header of the access unit including the face image data.

Moreover, the control information may include identification information for identifying each enhancement data unit (e.g., count information). Such identification information may be included in the header of the access unit including the enhancement data unit. Moreover, the control information may include total number information indicating the total number of one or more enhancement data units. Such total number information may be included in the header of the access unit including the base data unit.

FIG. 12 is a conceptual diagram illustrating a configuration example of a base data unit and an enhancement data unit. In this example, elements included in the face image are separated into a base data unit and an enhancement data unit. In other words, the base data unit has one or more face features (e.g., face shape, eyes, and mouth). The enhancement data unit has one or more other face features (e.g., eyebrows, ears, and nose). In order to reconstruct the face image, the base data unit and the enhancement data unit are combined.

For example, before encoding the base data unit using video codec, the base data unit may be generated by removing facial features (e.g., eyebrows, ears, and nose) from the face image using a segmentation mask. Moreover, before encoding the enhancement data unit, the enhancement data unit may be generated by removing face features already encoded in the base data unit from the face image using the same segmentation mask.

Moreover, the base data unit may be encoded using intra prediction. The enhancement data unit may be encoded using intra prediction or inter prediction. For example, the enhancement data unit may be data in which other facial features to be added to the facial features already encoded in the base data unit are encoded as prediction error data in inter prediction.

In this example, face features are gradually transmitted, and thus it is possible to reduce buffer underflow and occurrence of delay. Moreover, it is possible to understand facial expressions using the face partial features.

It is to be noted that the facial features included in the base data unit may be parts that can significantly affect the impression of facial expressions. With this, it is possible to understand the facial expressions earlier.

Moreover, in this example, only when all data units of the face image are obtained, the frame of the face video may be generated using the generative model. For example, until all data units of the face image are obtained, a frame including no face such as a fixed frame may be applied to the frame of the face video. With this, it is possible to reduce display of face whose features are missing.

FIG. 13 is a conceptual diagram illustrating another configuration example of the base data unit and the enhancement data unit. In this example, the base data unit corresponds to an image with low resolution. The enhancement data unit corresponds to an image with high resolution. More specifically, the enhancement data unit is prediction error data for reconstructing an image with high resolution from the image with low resolution. For example, a face image of high accuracy and high resolution can be reconstructed by adding the enhancement data unit to the image obtained by enhancing the resolution of the image corresponding to the base data unit using a super-resolution technique.

Specifically, for example, the base data unit may correspond to the face image that is encoded at low resolution (e.g., half or quarter of the resolution of a full image). The enhancement data unit may correspond to the face image that is encoded at full resolution using the base data unit as reference. Here, the base data unit may be encoded using intra prediction. The enhancement data unit may be encoded using inter prediction.

More specifically, in order to encode the image of the enhancement data unit using the inter prediction, the image of the base data unit may be used as a reference picture. In doing so, the reference picture resampling (RPR) technique may be used. In the RPR technique, the motion compensation process is performed using a scaling ratio. In this case, the scaling ration may be determined by a difference between the resolution of the base data unit and the resolution of the enhancement data unit.

Moreover, each of enhancement data units may correspond to a different resolution. The enhancement data units may be encoded in order of the resolution from the lowest resolution to the highest resolution.

FIG. 14 is a conceptual diagram illustrating yet another configuration example of the base data unit and the enhancement data unit. The base data unit corresponds to an image formed by low-frequency components of the face image. The enhancement data unit corresponds to an image formed by high-frequency components of the face image. The base data unit corresponds to an image formed by frequency components in the first frequency range in the face image, and the enhancement data unit corresponds to an image formed by frequency components in the second frequency range higher than the first frequency range in the face image. The face image is then reconstructed by adding the enhancement data unit to the base data unit.

For example, in encoding the base data unit, the low-frequency component image is obtained from the face image through a low-pass filter (or similar pre-processing technique). Using the video codec, the low-frequency component image is compressed to be encoded as the base data unit. Moreover, in encoding the enhancement data unit, the high-frequency component image is obtained from the face image through a high-pass filter. Using the video codec, the high-frequency component image is compressed to be encoded as the enhancement data unit.

Moreover, the base data unit may correspond to the image formed by frequency components lower than the threshold in the face image. The enhancement data unit may correspond to the image formed by frequency components not lower than the threshold in the face image.

Moreover, each of enhancement data units may correspond to a different frequency range. The enhancement data units may be encoded in order of the frequency range from the lowest frequency range to the highest frequency range.

Moreover, the base data unit may be encoded using intra prediction. The enhancement data unit may be encoded using intra prediction or inter prediction.

In this example, the face included in the face video may gradually become clear, and thus it is possible to cause less discomfort for a user viewing the face video.

It is to be noted that the enhancement data unit may be data corresponding to an image including both the low-frequency components and the high-frequency components. Specifically, the enhancement data unit may be data corresponding to the image including both the low-frequency components and the high-frequency components, and data corresponding to an image to be encoded using the inter prediction using the low-frequency component image as reference.

FIG. 15 is a conceptual diagram illustrating yet another configuration example of the base data unit and the enhancement data unit. The base data unit is part of the face image, and corresponds to a region included in the face image. The base data unit is part of the face image, and corresponds to a region included in the face image. The face image is reconstructed by combining the enhancement data unit with the base data unit.

Moreover, when the face image does not face the front, the base data unit may be data including only the captured part of the face. The enhancement data unit may be data including another part of the face which is captured in a direction different from a direction of the base data unit.

In this example, only when all data units of the face image are obtained, the frame of the face video may be generated using the neural network. For example, until all data units of the face image are obtained, a frame including no face such as a fixed frame may be applied to the frame of the face video. With this, it is possible to reduce display of face whose region is partially missing.

Moreover, the base data unit may be encoded using gradual decoding refresh (GDR) technique where only the left side of the image is intra encoded. The enhancement data unit may be encoded using GDR where only the right side of the image is intra encoded. After decoding the base data unit and the enhancement data unit, the complete face image may be reconstructed.

FIG. 16 is a conceptual diagram illustrating yet another configuration example of the base data unit and the enhancement data unit. In this example, the base data unit corresponds to data of the face image to be encoded using a big quantization parameter (QP) value and the intra prediction. The enhancement data unit corresponds to data of the face image to be encoded using a small QP value and the inter prediction.

Specifically, the QP value for use in encoding the enhancement data unit is smaller than the QP value for use in encoding the base data unit. With this, the accuracy of the face image to be encoded as the enhancement data unit is higher than the accuracy of the face image to be encoded as the base data unit. On the other hand, the enhancement data unit is encoded using the inter prediction using the base data unit as reference. This prevents the code amount of the enhancement data unit from becoming too large.

Moreover, the enhancement data unit is decoded using the inter prediction using the base data unit as reference. With this, the face image in which the base data unit and the enhancement data unit have been reflected is reconstructed.

In the examples of FIG. 12 through FIG. 16, after the enhancement data unit is obtained, a reconstructed data unit that is the face image data reconstructed using the base data unit and the enhancement data unit may be inputted to the generative model. Alternatively, both the base data unit and the enhancement data unit may be inputted to the generative model. Alternatively, both the base data unit and the reconstructed data unit may be inputted to the generative model. Alternatively, after enhancement data units are obtained, the base data unit and the enhancement data units may be inputted to the generative model, or the base data unit and reconstructed data units may be inputted to the generative model.

For example, as illustrated in FIG. 13, when the enhancement data unit is the prediction error data, a reconstructed data unit corresponding to the reconstructed face image may be obtained from the base data unit and the enhancement data unit and then inputted to the generative model. In doing so, both the base data unit and the reconstructed data unit may be inputted to the generative model. Moreover, for example, as illustrated in FIG. 12 or FIG. 15, when the image is represented by each of the base data unit and the enhancement data unit, both the base data unit and the enhancement data unit may be inputted to the generative model.

FIG. 17 is a conceptual diagram illustrating yet another configuration example of data corresponding to each frame. In this example, a SEI message is added to data corresponding to the frame of POC#0. The SEI message includes a parameter indicating the POC number that completes the face image data.

For example, the SEI message including this parameter may be transmitted in the first access unit in a bitstream, the first access unit in GOP, or the access unit including the base data unit.

The SEI message also may include a parameter indicating whether incomplete face image data is available to reconstruct and display the frame of the face video. Alternatively, the SEI message may include a parameter indicating a frame that is available even when the face image data is incomplete. Only for the frame indicated by the parameter, the frame of the face video may be generated using the neural network from the face image data added to this frame.

Moreover, an image identifier indicating the frame that completes the face image data may be used instead of POC indicating the frame that completes the face image data.

Moreover, the SEI message has the syntax structure, and thus a parameter in the SEI message can be also referred to as a syntax element in the syntax structure of the SEI message. Moreover, instead of the SEI message, a parameter indicating the same content as the content indicated by the above-mentioned parameter may be included in another header.

FIG. 18 is a conceptual diagram illustrating yet another configuration example of data corresponding to each frame. In this example, a SEI message is added to data corresponding to each frame. In other words, a SEI message is added to each access unit. The SEI message may include a parameter indicating whether the face image data is included in the access unit corresponding to the SEI message. Alternatively, the SEI message may be added to only the access unit including the face image data.

When the face image data is included in the access unit, the SEI message added to the access unit may include a parameter indicating whether the face image data included in the access unit is the base data unit or the enhancement data unit. Alternatively, the SEI message may include both a parameter indicating whether the base data unit is included in the target access unit and a parameter indicating whether the enhancement data unit is included in the target access unit.

When the face image data included in the access unit is the enhancement data unit, the SEI message added to the access unit may include a parameter indicating the count (the ordinal number) of the enhancement data unit. Moreover, the face image data is the base data unit, the SEI message added to the access unit may include a parameter indicating the total number of the enhancement data units associated with the base data unit.

Moreover, when the face image data is included in the access unit, the SEI message added to the access unit may include a parameter indicating whether the face image data in the access unit can be used to reconstruct and display the corresponding frame of the face video. Only when the parameter indicates that the face image data can be used to reconstruct and display the corresponding frame of the face video, the corresponding frame of the face video may be generated from the face image data in the access unit using a neural network.

Moreover, the SEI message added to the access unit, or another header may include one or more parameters indicating identifiers of access units each including face image data.

FIG. 19 is a conceptual diagram illustrating a control example of generation of a face video. For example, as illustrated in the examples of FIG. 12 and FIG. 15, the base data unit and the enhancement data units each correspond to a different part in the face image. In such a case, not displaying an incomplete partial image corresponding to the base data unit or the enhancement data unit may be better than displaying the incomplete partial image.

In view of this, at POC#0, the base data unit is obtained, but the frame of the face video is generated without the face of the person. Moreover, at POC#1, the first enhancement data unit is obtained, but the frame of the face video is generated without the face of the person.

At POC#2, the second enhancement data unit is obtained. The face image may be almost complete using the base data unit and two enhancement data units. Accordingly, at POC#2, the geometric information is further obtained, and the frame of the face video is generated with the face of the person from the base data unit, two enhancement data units, and the geometric information using a neural network.

At POC#3, the third enhancement data unit is obtained. The face image can be complete using the base data unit and three enhancement data units. Accordingly, at POC#3, the geometric information is further obtained, and the frame of the face video is generated with the face of the person from the base data unit, three enhancement data units, and the geometric information using a neural network.

Moreover, at POC#3, the frame of the face video is generated using more enhancement data units than POC#2. Accordingly, the level of completion of the face included in the frame generated at POC#3 is higher than the level of completion of the face included in the frame generated at POC#2.

For example, control information to be transmitted in the header such as the SEI may include application information indicating whether the face image data included in an access unit is applicable to generate and display the frame corresponding to the access unit. Moreover, the control information may include specification information (i) included in the header of the access unit including the base data unit and (ii) for specifying the enhancement data unit that is added to the data corresponding to the frame and applicable to generate and display the frame.

FIG. 10 illustrates another control example of generation of the face video. For example, as illustrated in the examples of FIG. 13, FIG. 14, and FIG. 16, the base data unit and the enhancement data units each correspond to a different quality of the face image. In such a case, displaying an incomplete low-quality image corresponding to the base data unit or the enhancement data unit may be better than not displaying the incomplete low-quality image.

In view of this, at POC#0, the base data unit and the geometric information are obtained, and the frame of the face video is generated from the base data unit and the geometric information using a neural network. Moreover, at POC#1, the first enhancement data unit and the geometric information are obtained, and the frame of the face video is generated from the base data unit, the enhancement data unit, and the geometric information using a neural network.

Also for the following frames, the frames of the face video are generated using the neural network in the same manner. Moreover, the quality of the frame of the face video is improved as the number of the enhancement data units used for the frame of the face video increases.

FIG. 20 is a block diagram illustrating another configuration example of encoder 100 according to the present embodiment. Encoder 100 generates a bitstream from a face image and a driving video. In this example, encoder 100 includes pre-processor 141, compressor 142, compressor 143, deriver 132, and compressor 133. For example, these components are each an electric circuit that performs information processing. Two or more of compressor 142, compressor 143, and compressor 133 may be integrated.

Deriver 132 and compressor 133 in FIG. 20 correspond to deriver 132 and compressor 133 in FIG. 3. Compressor 142 and compressor 143 in FIG. 20 correspond to compressor 131 in FIG. 3.

Pre-processor 141 obtains a face image and separates the face image into a base data unit and one or more enhancement data units. Compressor 142 obtains a base data unit and compresses the base data unit by encoding the base data unit into a bitstream. Compressor 143 obtains one or more enhancement data units and compresses the one or more enhancement data units by encoding the one or more enhancement data units into the bitstream.

Deriver 132 obtains a driving video and derives geometric information from each frame of the driving video. Compressor 133 obtains the geometric information and compresses the geometric information by encoding the geometric information into the bitstream.

FIG. 21 is a block diagram illustrating another configuration example of decoder 200 according to the present embodiment. Decoder 200 generates a face video from a bitstream. In this example, decoder 200 includes decompressor 241, decompressor 242, decompressor 233, and generator 234. For example, these components are each an electric circuit that performs information processing. Two or more of decompressor 241, decompressor 242, and decompressor 233 may be integrated.

Decompressor 233 and generator 234 in FIG. 21 correspond to decompressor 233 and generator 234 in FIG. 4. Decompressor 241 and decompressor 242 in FIG. 21 correspond to decompressor 231 in FIG. 4.

Decompressor 241 decompresses the base data unit by decoding the base data unit from the bitstream. Decompressor 242 decompresses one or more enhancement data units by decoding the one or more enhancement data units from the bitstream. Decompressor 233 decompresses the geometric information by decoding the geometric information from the bitstream. Generator 234 generates and outputs a face video from the base data unit, the one or more enhancement data units, and geometric information, using the generative model.

In generating the face video, generator 234 may obtain the face video outputted from the generative model by coupling a base data unit and an enhancement data unit and inputting the coupling data into the generative model along with the geometric information.

Alternatively, in generating the face video, generator 234 may obtain the face video outputted from the generative model by individually inputting a base data unit and an enhancement data unit into the generative model along with the geometric information without coupling the base data unit and the enhancement data unit. Alternatively, the enhancement data unit is prediction residual data for a base data unit, and generator 234 may obtain the face video outputted from the generative model by inputting data decoded using the inter prediction into the generative model along with the geometric information.

An exemplary use case of the present disclosure is the face re-enactment for the video conferencing and the entertainment industry. In the use case of the present disclosure, the bitstream is transmitted in narrow-bandwidth and low-latency situation. The present disclosure helps to reduce the fluctuation of transmission amount in the bitstream and reduce the fluctuation of data amount in the buffer. In other words, in the present disclosure, it is possible to decrease the buffer size, thereby allowing for low-latency face re-enactment.

FIG. 22 is a flow chart illustrating an operation example performed by encoder 100 according to the present embodiment. For example, encoder 100 encodes a base data unit into a bitstream (S101). The base data unit includes information of the face of a person, and is encoded into the first frame in the bitstream.

Moreover, encoder 100 encodes one or more enhancement data units into the bitstream (S102). The one or more enhancement data units include information of the face of the same person, and are encoded into one or more frames that are in the bitstream and different from the first frame.

Furthermore, encoder 100 may generate the frame of the face video from the base data unit and the one or more enhancement data units, using the generative model (S103). With this, it is possible to use encoder 100 to check the frame to be generated by decoder 200.

Moreover, encoder 100 may further encode the geometric information for each frame. In generating the frame of the face video, encoder 100 may generate the frame of the face video from the base data unit, the one or more enhancement data units, and the geometric information, using the generative model.

FIG. 23 is a flow chart illustrating an operation example performed by decoder 200 according to the present embodiment. For example, decoder 200 decodes a base data unit from a bitstream (S201). The base data unit includes information of the face of a person, and is decoded from the first frame in the bitstream.

Moreover, decoder 200 decodes one or more enhancement data units from the bitstream (S202). The one or more enhancement data units include information of the face of the same person, and are decoded from one or more frames that are in the bitstream and different from the first frame.

Furthermore, decoder 200 generates the frame of the face video from the base data unit and the one or more enhancement data units, using the generative model (S203). Decoder 200 may further decode the geometric information, and generate the frame of the face video from the base data unit, the one or more enhancement data units, and the geometric information, using the generative model.

For example, decoder 200 may reconstruct the face image data including the information of the face of the same person, using the base data unit and the one or more enhancement data units. Decoder 200 may then obtain the frame of the face video from the generative model by inputting the reconstructed face image data to the generative model.

Alternatively, decoder 200 may obtain the frame of the face video from the generative model by inputting the base data unit and the one or more enhancement data units to the generative model.

In one example, the base data unit, the one or more enhancement data units, and the reconstructed face image data may be vectors representing facial features. In another example, the base data unit, the one or more enhancement data units, and the reconstructed face image data may be images. The generative model can be used to generate the frame of the face video from the base data unit, the one or more enhancement data units, the reconstructed face image data, or any combination thereof.

A neural network may be used as the generative model. An example of such a neural network is a generative network. Examples of the generative network include Generative Adversarial Networks (GANs), Variational Autoencoders (VAEs), Autoregressive models, and Diffusion models.

The generative network is an example of a machine learning framework that generates new data based on a provided dataset. In order to ensure that samples of new data are similar to those of the original dataset, the generative model analyzes and learns the fundamental distribution of the dataset before generating the new data.

FIG. 24 is a block diagram illustrating yet another configuration example of encoder 100 according to the present embodiment. In this example, encoder 100 generates a bitstream including a compressed face image, a compressed driving video, and a compressed background image, from a face image, a driving video, and a background image. Encoder 100 includes compressor 131, deriver 132, compressor 133, and compressor 134. For example, these components are each an electric circuit that performs information processing. Two or more of compressor 131, compressor 133, and compressor 134 may be integrated.

Compressor 131, deriver 132, compressor 133, and compressor 134 in FIG. 24 correspond to compressor 131, deriver 132, compressor 133, and compressor 134 in FIG. 3, respectively.

FIG. 25 is a flow chart illustrating another operation example performed by encoder 100 according to the present embodiment. For example, the components of encoder 100 shown in FIG. 24 perform the operation according to the flow chart of FIG. 25.

In this example, first, compressor 131 encodes a face image into a bitstream to compress the face image (S301). The face image may be encoded according to a video codec method such as VVC. The face image may be a frame of the driving video, a pre-obtained image containing the face of a person, or an avatar.

Moreover, deriver 132 derives, from the driving video, geometric information indicating geometric attributes corresponding to each frame of the driving video (S302). The geometric information indicating the geometric attributes is also referred to just as geometric attributes. Specifically, deriver 132 inputs each frame of the driving video into a recognition model such as a neural network, and obtains the geometric information corresponding to each frame from the recognition model. The geometric information corresponds to a time instance of each frame of the driving video.

Here, for example, the geometric attributes correspond to dynamic attributes, and may be represented by a group of points such as facial landmarks, or may be represented by a polygon model for representing the shape of an object using a combination of polygons. Moreover, the geometric attributes may be represented by another geometric model. Moreover, the geometric attributes may be represented by the locations of parts of the face. Moreover, the geometric attributes may be handled as a set of geometric attributes.

For example, facial landmarks for use as the geometric attributes indicate locations of points on a facial main region including facial contour, eyes, eyebrows, nose, mouth, lips, and chin. Such geometric attributes are interpretable to other people or other devices, and thus it is possible to correct the attributes and improve the process of the attributes.

Compressor 133 encodes the geometric information into the bitstream using the method such as entropy encoding to compress the geometric information (S303).

Compressor 134 encodes at least one background image into the bitstream to compress the background image (S304). The background image may be encoded according to a video codec method such as VVC. The background image is used for a background region in the synthesized face video. In other words, the background image indicates a background overlaid on a face video including a face.

As with the case of the operation performed by decoder 200, encoder 100 may generate the synthesized face video based on the face image, the geometric information, and the background image (S305). In order to generate the synthesized face video, encoder 100 may include the same components as decoder 200. With this, it is possible to use encoder 100 to check the synthesized face video to be generated in decoder 200. It is to be noted that this process may be omitted.

After encoding the face image, the geometric information, and the background image into the bitstream, encoder 100 transmits the bitstream to decoder 200 via a transmission channel. For example, the compressed geometric information is transmitted as a bitstream from encoder 100 to decoder 200 for each of frames of the driving video, i.e., at every time instance. The compressed geometric information may be transmitted as supplemental enhancement information (SEI).

It is to be noted that one or more enhancement data units and a base data unit which form the face image may be handled as the face image. For example, compressor 131 may separate the face image into a base data unit and one or more enhancement data units, and encode the base data unit and the one or more enhancement data units into a bitstream as data units each corresponding to a different frame.

Moreover, the background image is not an essential element. Accordingly, encoder 100 need not include compressor 134. Moreover, the bitstream need not include the compressed background image. Moreover, input and output related to the background image may be omitted.

Alternatively, as with the case of the face image, the background image may be separated into a background base data unit and one or more background enhancement data units. The one or more background enhancement data units and the background base data unit which form the background image may be handled as the background image. Compressor 134 may separate the background image into a background base data unit and one or more background enhancement data units, and encode the background base data unit and the one or more background enhancement data units into a bitstream as data units each corresponding to a different frame.

FIG. 26 is a block diagram illustrating yet another configuration example of decoder 200 according to the present embodiment. In this example, decoder 200 generates a synthesized face video from a bitstream. Decoder 200 includes decompressor 231, deriver 232, decompressor 233, generator 234, decompressor 235, and synthesizer 236. For example, these components are each an electric circuit that performs information processing. Two or more of decompressor 231, decompressor 233, and decompressor 235 may be integrated.

Decompressor 231, deriver 232, decompressor 233, generator 234, and decompressor 235 in FIG. 26 correspond to decompressor 231, deriver 232, decompressor 233, generator 234, and decompressor 235 in FIG. 4.

FIG. 27 is a flow chart illustrating another operation example performed by decoder 200 according to the present embodiment. For example, the components of decoder 200 shown in FIG. 26 perform the operation according to the flow chart of FIG. 27. It is to be noted that the same explanation as the encoding may be omitted hereinafter.

Decompressor 231 decodes the face image from a bitstream to decompress the face image (S401). The face image may be decoded according to a video codec method such as VVC. Thereafter, decompressor 231 feeds the face image to deriver 232.

Deriver 232 derives, from the face image, face information indicating facial attributes (S402). Here, the face information indicating facial attributes is also referred to just as facial attributes. The facial attributes are static and visual attributes, and can be also referred to as identity. The facial attributes may include information regarding at least one of hair, eyeglasses, facial hair, eyebrows, eyes, mouth, nose, skin, facial contour, clothing, and accessory.

Decompressor 233 decodes the geometric information from the bitstream for each of frames using the method such as entropy decoding, to decompress the geometric information (S403).

Generator 234 generates an intermediate face video from the face information and the geometric information using a generative model such as a neural network (S404).

The generative model may be a generative adversarial network (GAN), a variational autoencoder (VAE), an autoregressive model, a diffusion model, or the like. For example, the generative model is a machine learning frame work for generating new data based on the provided data set, and may analyze and learn the basic distribution of the data set.

For example, for each of the frames, generator 234 inputs the face information and the geometric information to the generative model to obtain the intermediate face video and a segmentation mask from the generative model. More specifically, for each of the frames, generator 234 inputs the face information and the geometric information to the generative model to obtain a frame of the intermediate face video and a segmentation mask of the frame of the intermediate face video from the generative model. This segmentation mask indicates a foreground region and a background region in the intermediate face video (in particular, the frame of the intermediate face video).

The segmentation mask may be represented by a 2-dimesional map in which all the pixel values of the foreground region are 1 and all the pixel values of the background region are 0, or a 2-dimesional map in which all the pixel values of the foreground region are 0 and all the pixel values of the background region are 1. For example, the foreground region is a region including a face or the like and a region including motion, and the background region is a region not including a face or the like and a region not including motion. The segmentation mask is also referred to as segmentation information.

Instead of or in addition to the face information, generator 234 may render the intermediate face video using the face image per se. Moreover, deriver 232 may be included in generator 234, or need not be present. The recognition model for deriving the face information in deriver 232 may be included in the generative model for generating the intermediate face video or the like in generator 234. Regarding deriver 232 and the face information, the same is applied to other variations.

In other words, generator 234 may generate the segmentation mask and the intermediate face video from the face image and the geometric information using the generative model. In doing so, generator 234 may input the face image and the geometric information to the generative model to obtain the segmentation mask and the intermediate face video from the generative model.

Decompressor 235 decodes at least one background image from the bitstream to decompress the background image (S405). The background image may be decoded according to a video codec method such as VVC. Instead of the background image, a selection parameter for selecting a background image from the background image candidates may be decoded. The selection parameter may be the identifier of the background image corresponding to any one of the background image candidates.

Synthesizer 236 generates a synthesized face video using the intermediate face video, the segmentation mask, and the background image by embedding, into the background region in the intermediate face video, the corresponding region in the background image (S406).

It is to be noted that one or more enhancement data units and a base data unit which form the face image may be handled as the face image. For example, decompressor 231 may decode, from the bitstream, the one or more enhancement data units and the base data unit which have been encoded as data units each corresponding to a different frame.

Moreover, the background image is not an essential element. Accordingly, decoder 200 need not include decompressor 235 and synthesizer 236. Moreover, the bitstream need not include the compressed background image. Moreover, input and output related to the background image may be omitted.

Alternatively, as with the case of the face image, the one or more background enhancement data units and the background base data unit which form the background image may be handled as the background image. Decompressor 235 may decode, from the bitstream, the one or more background enhancement data units and the background base data unit which have been encoded as data units each corresponding to a different frame.

FIG. 28 is a block diagram illustrating yet another configuration example of decoder 200 according to the present embodiment. In the above-mentioned example, i.e., in the example of FIG. 26, generator 234 inputs the face information and the geometric information to the generative model to obtain the intermediate face video and the segmentation mask from the generative model.

In contrast, in this example, i.e., in the example of FIG. 28, generator 234 inputs the face information and the geometric information to the generative model to obtain the intermediate face video from the generative model. Generator 234 then performs the segmentation process on the intermediate face video to obtain the segmentation mask.

Specifically, for each of frames, generator 234 inputs the face information and the geometric information to the generative model to obtain a frame of the intermediate face video from the generative model. Generator 234 then performs the segmentation process on each frame of the intermediate face video to obtain the segmentation mask of each frame of the intermediate face video.

With this, it may be possible to subdivide the processing and facilitate the processing. Instead of generator 234, a segmentation processor (not shown) may perform the segmentation process.

The segmentation process may be performed using a machine learning model such as a neural network. The same is applied to the other segmentation processes of the present disclosure.

The foreground region and the background region in the intermediate face video and the synthesized face video generated in decoder 200 correspond to the foreground region and the background region in the driving video. Accordingly, encoder 100 may perform the segmentation process on the driving video, and encode the segmentation mask of the driving video. Decoder 200 may then decode the segmentation mask, and generates the synthesized face video using the segmentation mask.

Specifically, in encoder 100, for each of the frames, deriver 132 may perform the segmentation process on the driving video to generate a segmentation mask indicating the foreground region and the background region in the driving video. Moreover, compressor 133 may encode the segmentation mask into a bitstream to compress the segmentation mask.

In decoder 200, decompressor 233 may decode the segmentation mask from the bitstream to decompress the segmentation mask. Furthermore, synthesizer 236 may generate the synthesized face video using the segmentation mask. With this, the processing amount in decoder 200 may be reduced.

Moreover, in encoder 100, a segmentation processor different from deriver 132 (not shown) may perform the segmentation process. Moreover, a compressor different from compressor 133 (not shown) may encode the segmentation mask into a bitstream. Moreover, in decoder 200, a decompressor different from decompressor 233 (not shown) may decode the segmentation mask from the bitstream.

Moreover, the segmentation mask may be transmitted in SEI from encoder 100 to decoder 200 for each of the frames.

A specified background color code for the background may be assigned to each pixel sample in the background region of the face image. With this, the intermediate face video in which the specified background color code is assigned to each pixel sample in the background region is generated. Accordingly, it is possible to efficiently identify the background region in the intermediate face video without performing the segmentation process.

FIG. 29 is a block diagram illustrating yet another configuration example of decoder 200 according to the present embodiment. In this example, generator 234 generates a synthesized face video from the face information, the geometric information, and the background image using the generative model. Specifically, generator 234 generates a synthesized face video by inputting the face information, the geometric information, and the background image to the generative model to obtain the synthesized face video from the generative model. With this, the processing can be simplified. In this case, decoder 200 need not include additional synthesizer 236.

### [Example of Generative Model]

FIG. 30 is a diagram illustrating an example of different models applicable as a generative model. For example, a neural network is used as the generative model. Specifically, a generative adversarial network, a variational autoencoder, a flow-based generative model, and a diffusion model are illustrated in FIG. 30.

The generative adversarial creates new data instances that are similar to the input data via learning characteristics in the input data. Specifically, an unsupervised task of the generative model is converted into a supervised task by two types of sub-models.

For example, a generator sub-model generates fake samples, and a discriminator sub-model distinguishes true inputs from the fake samples generated by the generator sub-model. The output images are then generated via a minimax game to maximize the discrimination probability of the discriminator sub-model in assigning accurate labels to the true inputs and the fake samples and simultaneously minimize the differences in distributions of the true inputs and the fake samples.

The variational autoencoder first compresses input data into a multivariate latent distribution for reconstructing data from the latent space as accurately as possible. With this, data compression and dimensionality reduction are efficiently performed. The flow-based generative model converts a source distribution to the distribution of training data via a sequence of one or more invertible transformations. This allows for the learning of the data distribution and exact computation of likelihood of the final target.

The diffusion model also creates new data instances similar to the training data. The diffusion model first degrades the structure of the training data via iterative infusion of perturbations and noise before starting a denoising process in an attempt to recover the original data. This results in iterative mapping of data into latent distributions via Markov chains where the latent state in each step is only dependent on the latent state in the previous step. The data is then recovered by denoising in a hierarchical fashion.

For example, the neural network may be a face picture generator neural network applicable to generate an output picture using a picture and geometric information represented in a fixed format for a facial parameter. In other words, the neural network corresponds to a process of generating samples included in the output picture that is one picture included in an output video.

An alternative example of the above-mentioned neural network may comprise of a combination of any of the above-mentioned models. Alternatively, other types of generative models, or the like may be used.

Moreover, the machine learning model such as a neural network may be used for the segmentation process. Moreover, the machine learning model such as a neural network may be used to derive the geometric information or to derive the face information.

### [Configuration Example of Video Encoding and Video Decoding]

FIG. 31 is a block diagram illustrating a configuration example for encoder 100 according to the present embodiment to encode a video. For example, encoder 100 may include the components illustrated in FIG. 31 as components for encoding an image in a video on a per block basis according to VVC. In addition to the above-mentioned components, encoder 100 may include the components illustrated in FIG. 31. At least part of the above-mentioned components may be integrated into the components illustrated in FIG. 31.

As illustrated in FIG. 31, encoder 100 includes splitter 102, subtractor 104, transformer 106, quantizer 108, entropy encoder 110, inverse quantizer 112, inverse transformer 114, adder 116, block memory 118, loop filter 120, frame memory 122, intra predictor 124, inter predictor 126, prediction controller 128, and prediction parameter generator 130. It is to be noted that intra predictor 124 and inter predictor 126 are configured as part of a prediction executor.

Splitter 102 splits an image into blocks, and provides a parameter related to the splitting to entropy encoder 110. Subtractor 104 subtracts a prediction image block from a current block to obtain a prediction residual block. Transformer 106 transforms the prediction residual block to obtain a transform coefficient block. Quantizer 108 quantizes the transform coefficient block to obtain a quantized coefficient block. Entropy encoder 110 entropy encodes the quantized coefficient block and the parameter, to generate a bitstream.

Inverse quantizer 112 performs inverse quantization of the quantized coefficient block to obtain a transform coefficient block. Inverse transformer 114 performs inverse transformation of the transform coefficient block to obtain a prediction residual block. Adder 116 adds the prediction image block to the prediction residual block to obtain a reconstructed image block. Block memory 118 stores the reconstructed image block. Loop filter 120 applies a loop filter to the reconstructed image block. Frame memory 122 stores the reconstructed image block to which the loop filter is applied.

Intra predictor 124 generates a prediction image block by performing intra prediction by referring to block memory 118. Inter predictor 126 generates a prediction image block by performing inter prediction by referring to frame memory 122. Prediction controller 128 provides, to subtractor 104 and adder 116, a prediction image block generated by intra predictor 124 or a prediction image block generated by inter predictor 126. Prediction parameter generator 130 provides a parameter related to the intra prediction or the inter prediction to entropy encoder 110.

FIG. 32 is a block diagram illustrating a configuration example for decoder 200 according to the embodiment to decode a video. For example, decoder 200 may include the components illustrated in FIG. 32 as components for decoding an image in a video on a per block basis according to VVC. In addition to the above-mentioned components, decoder 200 may include the components illustrated in FIG. 32. At least part of the above-mentioned components may be integrated into the components illustrated in FIG. 32.

As illustrated in FIG. 32, decoder 200 includes entropy decoder 202, inverse quantizer 204, inverse transformer 206, adder 208, block memory 210, loop filter 212, frame memory 214, intra predictor 216, inter predictor 218, prediction controller 220, prediction parameter generator 222, and splitting determiner 224. It is to be noted that intra predictor 216 and inter predictor 218 are configured as part of a prediction executor.

Entropy decoder 202 entropy decodes a bitstream to obtain a quantized coefficient block and a parameter. Inverse quantizer 204 performs inverse quantization of the quantized coefficient block to obtain a transform coefficient block. Inverse transformer 206 performs inverse transformation of the transform coefficient block to obtain a prediction residual block. Adder 208 adds the prediction image block to the prediction residual block to obtain a reconstructed image block. Loop filter 212 applies a loop filter to the reconstructed image block.

Block memory 210 stores the reconstructed image block. Frame memory 214 stores the reconstructed image block to which the loop filter is applied.

Intra predictor 216 generates a prediction image block by performing intra prediction by referring to block memory 210. Inter predictor 218 generates a prediction image block by performing inter prediction by referring to frame memory 214. Prediction controller 220 provides, to adder 208, a prediction image block generated by intra predictor 216 or a prediction image block generated by inter predictor 218. Prediction parameter generator 222 provides a parameter related to the intra prediction or the inter prediction to prediction controller 220.

Splitting determiner 224 determines a block for decoding an image on a per block basis, according to a parameter related to the splitting.

### [Combinations]

Any of the configuration examples according to the present disclosure may be combined. Moreover, any of the operation examples according to the present disclosure may be combined. Moreover, duplicated descriptions in the examples of the present disclosure may be omitted. Moreover, the configuration and processing corresponding to the configuration and processing of encoding may be applied to decoding, or the configuration and processing corresponding to the configuration and processing of decoding may be applied to encoding. Moreover, only part of an example included in the examples of the present disclosure may be performed.

### [Implementation Examples]

FIG. 33 is a block diagram illustrating an implementation example of encoder 100. Encoder 100 includes circuitry 151 and memory 152. For example, the components of encoder 100 described above are implemented by circuitry 151 and memory 152.

Circuitry 151 is an electrical circuit that performs information processing, and is accessible to memory 152. For example, circuitry 151 may be a dedicated circuit that performs the encoding method according to the present disclosure, or a general circuit that executes a program corresponding to the encoding method according to the present disclosure. Circuitry 151 also may be a processor such as a CPU. Circuitry 151 further may be an aggregate of multiple circuits.

Memory 152 is a dedicated or general memory that stores information for circuitry 151 to encode an image. Memory 152 may be an electrical circuit, and may be connected to circuitry 151. Memory 152 also may be included in circuitry 151. Memory 152 also may be an aggregate of multiple circuits. Memory 152 also may be a magnetic disk or an optical disk, or may be referred to as a storage, a recording medium, or the like. Memory 152 also may be a non-volatile memory, or a volatile memory.

For example, memory 152 may store data to be encoded such as an image, or encoded data such as a bitstream. Memory 152 also may store a program for causing circuitry 151 to perform image processing. Memory 152 also may store a generative model.

FIG. 34 is a flow chart illustrating the first basic operation example performed by encoder 100. In operation of this example, circuitry 151 of encoder 100 performs the following steps using memory 152.

Specifically, circuitry 151 encodes, into a bitstream, a base data unit of a face image related to a face video and one or more enhancement data units of the face image (S501).

Moreover, in the bitstream, the base data unit is added to a data set corresponding to a first frame. In the bitstream, the one or more enhancement data units are added to one or more data sets corresponding to one or more second frames. The first frame is a frame of the face video. The one or more second frames are one or more frames of the face video and follow the first frame.

Moreover, circuitry 151 encodes geometric information into the bitstream (S502). Here, the geometric information corresponds to each of frames of the face video, and indicates geometric attributes within a region including a face of a person.

With this, it may be possible to separately encode the base data unit and one or more enhancement data units that are related to the face image, in frames. Accordingly, it may be possible to reduce the code amount corresponding to one frame. Accordingly, it may be possible to reduce delay.

It is to be noted that the geometric information may correspond to each of third frames of the face video. The first frame may be included in the third frames, or may not be included in the third frames. As with the case of the first frame, the one or more second frames may be included in the third frames, or may not be included in the third frames.

Moreover, in the bitstream, data corresponding to a frame of the face video may include the geometric information corresponding to the frame, or may include an encoding parameter corresponding to the frame such as decoding time and display time. In the bitstream, the data corresponding to the frame of the face video may be an access unit corresponding to the frame of the face video.

For example, circuitry 151 may encode, into a header, control information regarding a control of at least one of face image data units that are the base data unit and the one or more enhancement data units. With this, in the reconstruction of the face video, according to the control information, it may be possible to apply an appropriate process to the face image data.

Moreover, for example, the control information may include presence information indicating whether a face image data unit is included in an access unit controlled by the header. The face image data unit is one of the face image data units. With this, in the reconstruction of the face video, according to the control information, it may be possible to identify whether the face image data is included in the access unit. Accordingly, it may be possible to apply an appropriate process to the face image data.

Moreover, for example, when a face image data unit is included in an access unit controlled by the header, the control information may include type information regarding whether the face image data unit is the base data unit or an enhancement data unit. The face image data unit is one of the face image data units. The enhancement data unit is one of the one or more enhancement data units.

Specifically, when the access unit includes the base data unit, the type information may indicate that the face image data unit included in the access unit is the base data unit and continues to be used until a next base data unit. Moreover, when the access unit includes the enhancement data unit, the type information may indicate that the face image data unit included in the access unit is the enhancement data unit and is used together with the base data unit.

With this, in the reconstruction of the face video, according to the control information, it may be possible to identify whether the face image data is the base data unit or the enhancement data unit. According to whether the face image data is the base data unit or the enhancement data unit, it may be possible to apply an appropriate process to the face image data.

Moreover, for example, when a face image data unit is included in an access unit controlled by the header, the control information may include application information. The face image data unit is one of the face image data units. Here, the application information indicates whether the face image data unit is applicable to generate and display a frame corresponding to the access unit among the frames of the face video. With this, in the reconstruction of the face video, according to the control information, it may be possible to appropriately control whether to apply, to a frame of the face video, the face image data added to the data corresponding to the frame.

Moreover, for example, each of the base data unit and the one or more enhancement data units may be represented by a vector indicating a facial feature included in the face image. With this, it may be possible to reduce the code amount related to the face image. Accordingly, it may be possible to reduce delay.

Moreover, for example, each of the base data unit and the one or more enhancement data units may be represented by an image related to the face image. With this, in the reconstruction of the face video, it may be possible to appropriately reflect each of the base data unit and the enhancement data units related to the face image to the frame of the face video as image data.

Moreover, for example, circuitry 151 may derive and encode, as the base data unit, data of part of a face included in the face image. Circuitry 151 also may derive and encode, as an enhancement data unit, data of other part of the face included in the face image. The enhancement data unit is one of the one or more enhancement data units. With this, it may be possible to separately encode the face image in parts without performing a complicated process.

It is to be noted that the part of the face may be part of facial features, or may be part of facial regions. The other part of the face may be another part of facial features, or may be another part of facial regions. Moreover, the base data unit may be a data set of the first part. The one or more enhancement data units may be one or more data sets of one or more second parts different from the first part. When the enhancement data units are used, the second parts different from each other may be used.

Moreover, for example, circuitry 151 may derive and encode, as the base data unit, data in a first frequency range of the face image. Circuitry 151 also may derive and encode, as an enhancement data unit, data in a second frequency range higher than the first frequency range of the face image. The enhancement data unit is one of the one or more enhancement data units.

With this, it may be possible to encode the low-frequency component data of the face image as the base data unit, and encodes the high-frequency component data of the face image as the enhancement data unit. In the reconstruction of the face video, it may be possible to apply the low-frequency component data to generate the first frame of the face video, and apply both the low-frequency component data and the high-frequency component data to generate the second frame of the face video. Accordingly, it may be possible to cause less discomfort in the face video while reducing delay.

It is to be noted that the data in the first frequency range may include the lowest-frequency component data, i.e., direct-current (DC) component data. Moreover, the one or more enhancement data units may be one or more data sets in one or more second frequency ranges higher than the first frequency range. When the enhancement data units are used, the second frequency ranges different from each other may be used.

Moreover, for example, circuitry 151 may encode, as the base data unit, a first image. Moreover, for example, circuitry 151 may encode, as the base data unit, a second image. Here, the first image is related to the face image and has a first resolution. The second image is related to the face image, is encoded using the first image as reference, and has a second resolution higher than the first resolution.

With this, it may be possible to encode the face image with low resolution as the base data unit, and encodes the face image with high resolution as the enhancement data unit. In the reconstruction of the face video, it may be possible to apply the face image with low resolution to generate the first frame of the face video, and apply the face image with high resolution to generate the second frame of the face video. Accordingly, it may be possible to cause less discomfort in the face video while reducing delay.

It is to be noted that the one or more enhancement data units may correspond to one or more second images having one or more second resolutions higher than the first resolution. When the enhancement data units are used, the second resolutions different from each other may be used. Moreover, the enhancement data units may correspond to second images. Moreover, in encoding a second image, another second image may be referred to instead of the first image.

Moreover, the one or more second frames may be after the first frame in the display order, or may be after the first frame in the encoding order or in the decoding order.

Moreover, the base data unit may include first information that is information on the face image. Each of the one or more enhancement data units may include second information that is information on the face image and different from the first information.

Moreover, encoder 100 may include an input terminal, an entropy encoder, and an output terminal. The operation performed by circuitry 151 may be performed by the entropy encoder. Moreover, the input terminal may receive data for use in the operation of the entropy encoder. The output terminal may output the data obtained by the operation of the entropy encoder.

FIG. 35 is a block diagram illustrating an implementation example of decoder 200. Decoder 200 includes circuitry 251 and memory 252. For example, the components of decoder 200 described above are implemented by circuitry 251 and memory 252.

Circuitry 251 is an electrical circuit that performs information processing, and is accessible to memory 252. For example, circuitry 251 may be a dedicated circuit that performs the decoding method according to the present disclosure, or a general circuit that executes a program corresponding to the decoding method according to the present disclosure. Circuitry 251 also may be a processor such as a CPU. Circuitry 251 further may be an aggregate of multiple circuits.

Memory 252 is a dedicated or general memory that stores information for circuitry 251 to decode an image. Memory 252 may be an electrical circuit, and may be connected to circuitry 251. Memory 252 also may be included in circuitry 251. Memory 252 also may be an aggregate of multiple circuits. Memory 252 also may be a magnetic disk or an optical disk, or may be referred to as a storage, a recording medium, or the like. Memory 252 also may be a non-volatile memory, or a volatile memory.

For example, memory 252 may store data to be decoded such as a bitstream, or decoded data such as an image. Memory 252 also may store a program for causing circuitry 251 to perform image processing. Memory 252 also may store a generative model.

FIG. 36 is a flow chart illustrating a first basic operation example performed by decoder 200. In operation of this example, circuitry 251 of decoder 200 performs the following steps using memory 252.

Specifically, circuitry 251 decodes, from a bitstream, a base data unit of a face image related to a face video and one or more enhancement data units of the face image (S601).

Moreover, in the bitstream, the base data unit is added to a data set corresponding to a first frame. In the bitstream, the one or more enhancement data units are added to one or more data sets corresponding to one or more second frames. The first frame is a frame of the face video. The one or more second frames are one or more frames of the face video and follow the first frame.

Moreover, circuitry 251 decodes geometric information from the bitstream (S602). Here, the geometric information corresponds to each of frames of the face video, and indicates geometric attributes within a region including a face of a person. Moreover, circuitry 251 generates the face video from the base data unit, the one or more enhancement data units, and the geometric information, using a generative model (S603).

With this, it may be possible to separately decode the base data unit and one or more enhancement data units that are related to the face image, in frames. Accordingly, it may be possible to reduce the code amount corresponding to one frame. Accordingly, it may be possible to reduce delay.

It is to be noted that the geometric information may correspond to each of third frames of the face video. The first frame may be included in the third frames, or may not be included in the third frames. As with the case of the first frame, the one or more second frames may be included in the third frames, or may not be included in the third frames.

Moreover, in the bitstream, data corresponding to a frame of the face video may include the geometric information corresponding to the frame, or may include an encoding parameter corresponding to the frame such as decoding time and display time. In the bitstream, the data corresponding to the frame of the face video may be an access unit corresponding to the frame of the face video.

For example, circuitry 251 may decodes, from a header, control information regarding a control of at least one of face image data units that are the base data unit and the one or more enhancement data units. With this, in the reconstruction of the face video, according to the control information, it may be possible to apply an appropriate process to the face image data.

Moreover, for example, the control information may include presence information indicating whether a face image data unit is included in an access unit controlled by the header. The face image data unit is one of the face image data units. With this, in the reconstruction of the face video, according to the control information, it may be possible to identify whether the face image data is included in the access unit. Accordingly, it may be possible to apply an appropriate process to the face image data.

Moreover, for example, when a face image data unit is included in an access unit controlled by the header, the control information may include type information regarding whether the face image data unit is the base data unit or an enhancement data unit. The face image data unit is one of the face image data units. The enhancement data unit is one of the one or more enhancement data units.

Specifically, when the access unit includes the base data unit, the type information may indicate that the face image data unit included in the access unit is the base data unit and continues to be used until a next base data unit. Moreover, when the access unit includes the enhancement data unit, the type information may indicate that the face image data unit included in the access unit is the enhancement data unit and is used together with the base data unit.

With this, in the reconstruction of the face video, according to the control information, it may be possible to identify whether the face image data is the base data unit or the enhancement data unit. According to whether the face image data is the base data unit or the enhancement data unit, it may be possible to apply an appropriate process to the face image data.

Moreover, for example, when a face image data unit is included in an access unit controlled by the header, the control information may include application information. The face image data unit is one of the face image data units. Here, the application information indicates whether the face image data unit is applicable to generate and display a frame corresponding to the access unit among the frames of the face video. With this, in the reconstruction of the face video, according to the control information, it may be possible to appropriately control whether to apply, to a frame of the face video, the face image data added to the data corresponding to the frame.

Moreover, for example, each of the base data unit and the one or more enhancement data units may be represented by a vector indicating a facial feature included in the face image. With this, it may be possible to reduce the code amount related to the face image. Accordingly, it may be possible to reduce delay.

Moreover, for example, each of the base data unit and the one or more enhancement data units may be represented by an image related to the face image. With this, in the reconstruction of the face video, it may be possible to appropriately reflect each of the base data unit and the enhancement data units related to the face image to the frame of the face video as image data.

Moreover, for example, circuitry 251 may input the base data unit, at least one of the one or more enhancement data units, and the geometric information to the generative model to generate a frame of the face video. With this, it may be possible to skip a process of generating an intermediate image from the base data unit and the enhancement data units related to the face image. Accordingly, it may be possible to simplify the process of generating the face video. It is to be noted that the frame corresponding to the geometric information can be generated as the frame of the face video.

Moreover, for example, circuitry 251 may generate an intermediate image from the base data unit and at least one of the one or more enhancement data units. Circuitry 251 may input the intermediate image and the geometric information to the generative model to generate a frame of the face video.

With this, it may be possible to appropriately generate an intermediate image related to the face image from the base data unit and the enhancement data units related to the face image. It may be possible to appropriately reflect the intermediate image related to the face image to the frame of the face video. It is to be noted that the frame corresponding to the geometric information can be generated as the frame of the face video.

Moreover, for example, circuitry 251 may decode an enhancement data unit using the base data unit as reference. The enhancement data unit is one of the one or more enhancement data units. Circuitry 251 may input the enhancement data unit and the geometric information to the generative model to generate a frame of the face video.

With this, it may be possible to efficiently decode the enhancement data unit that has accuracy higher than that of the base data unit. It may be possible to generate the frame of the face video with high accuracy using the enhancement data unit of high accuracy. It is to be noted that the frame corresponding to the geometric information can be generated as the frame of the face video.

Moreover, for example, the base data unit may be data of part of a face included in the face image. Moreover, an enhancement data unit may be data of other part of the face included in the face image. The enhancement data unit is one of the one or more enhancement data units. With this, it may be possible to separately decode the face image in parts without performing a complicated process.

It is to be noted that the part of the face may be part of facial features, or may be part of facial regions. The other part of the face may be another part of facial features, or may be another part of facial regions. Moreover, the base data unit may be a data set of the first part. The one or more enhancement data units may be one or more data sets of one or more second parts different from the first part. When the enhancement data units are used, the second parts different from each other may be used.

Moreover, for example, the base data unit may be data in a first frequency range of the face image. Moreover, an enhancement data unit may be data in a second frequency range higher than the first frequency range of the face image. The enhancement data unit is one of the one or more enhancement data units.

With this, it may be possible to decode the low-frequency component data of the face image as the base data unit, and decodes the high-frequency component data of the face image as the enhancement data unit. In the reconstruction of the face video, it may be possible to apply the low-frequency component data to generate the first frame of the face video, and apply both the low-frequency component data and the high-frequency component data to generate the second frame of the face video. Accordingly, it may be possible to cause less discomfort in the face video while reducing delay.

It is to be noted that the data in the first frequency range may include the lowest-frequency component data, i.e., direct-current (DC) component data. Moreover, the one or more enhancement data units may be one or more data sets in one or more second frequency ranges higher than the first frequency range. When the enhancement data units are used, the second frequency ranges different from each other may be used.

Moreover, for example, the base data unit may correspond to a first image. An enhancement data unit may correspond to a second image. The enhancement data unit is one of the one or more enhancement data units. Here, the first image is related to the face image and has a first resolution. The second image is related to the face image, is decoded using the first image as reference, and has a second resolution higher than the first resolution.

With this, it may be possible to decode the face image with low resolution as the base data unit, and decodes the face image with high resolution as the enhancement data unit. In the reconstruction of the face video, it may be possible to apply the face image with low resolution to generate the first frame of the face video, and apply the face image with high resolution to generate the second frame of the face video. Accordingly, it may be possible to cause less discomfort in the face video while reducing delay.

It is to be noted that the one or more enhancement data units may correspond to one or more second images having one or more second resolutions higher than the first resolution. When the enhancement data units are used, the second resolutions different from each other may be used. Moreover, the enhancement data units may correspond to second images. Moreover, in decoding a second image, another second image may be referred to instead of the first image.

Moreover, for example, the base data unit may correspond to a first image. An enhancement data unit may correspond to a second image. The enhancement data unit is one of the one or more enhancement data units. Here, the first image is related to the face image and decoded with a first quantization step size. The second image is related to the face image and decoded with a second quantization step size finer than the first quantization step size using the first image as reference.

With this, it may be possible to decode the rough face image as the base data unit, and decodes the fine face image as the enhancement data unit. In the reconstruction of the face video, it may be possible to apply the rough face image to generate the first frame of the face video, and apply the fine face image to generate the second frame of the face video. Accordingly, it may be possible to cause less discomfort in the face video while reducing delay.

It is to be noted that the fine quantization step size may be a small quantization step size. Moreover, the one or more enhancement data unit may correspond to one or more second images that are decoded with one or more second quantization step sizes finer than the first quantization step size. When the enhancement data units are used, the second quantization step sizes different from each other may be used. Moreover, the enhancement data units may correspond to second images. Moreover, in decoding a second image, another second image may be referred to instead of the first image.

Moreover, for example, the control information may include identification information for identifying each of the one or more enhancement data units. With this, in the reconstruction of the face video, according to the control information, it may be possible to identify each enhancement data unit. Accordingly, it may be possible to individually specify each enhancement data unit, and control application of each enhancement data unit.

Moreover, for example, the control information may include total number information (i) included in the header of an access unit including the base data unit, and (ii) indicating a total number of the one or more enhancement data units. With this, in the reconstruction of the face video, according to the control information, it may be possible to identify the total number of one or more enhancement data units. Accordingly, according to the total number of one or more enhancement data units, it may be possible to efficiently determine one or more enhancement data units available for the reconstruction of the face video.

Moreover, for example, the control information may include specification information (i) included in the header of an access unit including the base data unit. Moreover, the specification information may be (ii) for specifying an enhancement data unit that is applicable to generate and display a second frame corresponding to an access unit including the enhancement data unit. The enhancement data unit is among the one or more enhancement data units. The second frame is among the one or more second frames.

With this, in the reconstruction of the face video, according to the control information, it may be possible to appropriately specify the enhancement data unit applicable to generate and display the frame of the face video.

Moreover, for example, circuitry 251 may decode at least one control parameter for controlling a stream buffer at which the bitstream is stored in memory 252. Moreover, the at least one control parameter may be a parameter for controlling a buffer size of the stream buffer to be smaller than or equal to a reference size and an initial delay time at start of a decoding process to be shorter than or equal to a reference delay time. With this, it is possible to reduce the resources for decoding and shorten the delay time.

Moreover, for example, the one or more second frames may be after the first frame in the display order, or may be after the first frame in the encoding order or in the decoding order.

Moreover, the base data unit may include first information that is information on the face image. Each of the one or more enhancement data units may include second information that is information on the face image and different from the first information.

Moreover, for example, decoder 200 may include an input terminal, an entropy decoder, and an output terminal. The operation performed by circuitry 251 may be performed by the entropy decoder. Moreover, the input terminal may receive data for use in the operation of the entropy decoder. The output terminal may output the data obtained by the operation of the entropy decoder.

Moreover, for example, a non-transitory computer readable medium storing a bitstream may be used. The bitstream may include a base data unit of a face image related to a face video, one or more enhancement data units of the face image, and geometric information.

Moreover, in the bitstream, the base data unit is added to a data set corresponding to a first frame. In the bitstream, the one or more enhancement data units are added to one or more data sets corresponding to one or more second frames. The first frame is a frame of the face video. The one or more second frames are one or more frames of the face video and follow the first frame. Moreover, the geometric information corresponds to each of frames of the face video, and indicates geometric attributes within a region including a face of a person.

The bitstream may cause decoder 200 to execute a process of (i) decoding the base data unit, the one or more enhancement data units, and the geometric information, and (ii) generating the face video from the base data unit, the one or more enhancement data units, and the geometric information, using a generative model.

With this, it may be possible to implement the medium storing one or more bitstreams corresponding to the decoder and decoding method described above. Accordingly, it may be possible to produce the similar effect to decoder 200 described above using the medium.

### [Other Examples]

Encoder 100 and decoder 200 in each of the above-described examples may be used as an image encoder and an image decoder, respectively, or may be used as a video encoder and a video decoder, respectively. Moreover, the components included in encoder 100 and the components included in decoder 200 may perform operations corresponding to each other.

Moreover, the term "encode" may be replaced with another term such as store, include, write, describe, signal, send out, notice, or hold, and these terms are interchangeable. For example, encoding information may be including information in a bitstream. Moreover, encoding information into a bitstream may mean that information is encoded to generate a bitstream including the encoded information.

Moreover, the term "decode" may be replaced with another term such as retrieve, parse, read, load, derive, obtain, receive, extract, or restore, and these terms are interchangeable. For example, decoding information may be obtaining information from a bitstream. Moreover, decoding information from a bitstream may mean that a bitstream is decoded to obtain information included in the bitstream.

Moreover, for example, encoding information, compressed information, and the like included in a bitstream may be referred to just as information.

In addition, at least a part of each example described above may be used as an encoding method or a decoding method, may be used as an entropy encoding method or an entropy decoding method, or may be used as another method.

In addition, each component may be configured with dedicated hardware, or may be implemented by executing a software program suitable for the component. Each component may be implemented by causing a program executer such as a CPU or a processor to read out and execute a software program stored on a medium such as a hard disk or a semiconductor memory.

More specifically, each of encoder 100 and decoder 200 may include processing circuitry and storage which is electrically connected to the processing circuitry and is accessible from the processing circuitry. For example, the processing circuitry corresponds to circuit 151 or 251, and the storage corresponds to memory 152 or 252.

The processing circuitry includes at least one of a dedicated hardware and a program executer, and performs processing using the storage. Moreover, when the processing circuitry includes the program executer, the storage stores a software program to be executed by the program executer.

An example of the software program described above is a bitstream. The bitstream includes an encoded image and syntaxes for performing a decoding process that decodes an image. The bitstream causes decoder 200 to execute the process according to the syntaxes, and thereby causes decoder 200 to decode an image. Moreover, for example, the software which implements encoder 100, decoder 200, or the like described above is a program indicated below.

For example, this program may cause a computer to execute an encoding method including: encoding, into a bitstream, a base data unit of a face image related to a face video and one or more enhancement data units of the face image; and encoding, into the bitstream, geometric information corresponding to each of frames of the face video and indicating geometric attributes within a region including a face of a person, in which in the bitstream, the base data unit is added to a data set corresponding to a first frame that is a frame of the face video, and in the bitstream, the one or more enhancement data units are added to one or more data sets corresponding to one or more second frames that are one or more frames of the face video and follow the first frame.

Moreover, for example, this program may cause a computer to execute a decoding method including: decoding, from a bitstream, a base data unit of a face image related to a face video and one or more enhancement data units of the face image; decoding, from the bitstream, geometric information corresponding to each of frames of the face video and indicating geometric attributes within a region including a face of a person; and generating the face video from the base data unit, the one or more enhancement data units, and the geometric information, using a generative model, in which in the bitstream, the base data unit is added to a data set corresponding to a first frame that is a frame of the face video, and in the bitstream, the one or more enhancement data units are added to one or more data sets corresponding to one or more second frames that are one or more frames of the face video and follow the first frame.

Moreover, each component as described above may be a circuit. The circuits may compose circuitry as a whole, or may be separate circuits. Alternatively, each component may be implemented as a general processor, or may be implemented as a dedicated processor.

Moreover, the process that is executed by a particular component may be executed by another component. Moreover, the processing execution order may be modified, or a plurality of processes may be executed in parallel. Moreover, any two or more of the examples of the present disclosure may be performed by being combined appropriately. Moreover, an encoding and decoding device may include encoder 100 and decoder 200.

Moreover, all the components according to the present disclosure need not be implemented, and only some of the components according to the present disclosure may be implemented. Likewise, all the processes according to the present disclosure need not be implemented, and only some of the processes according to the present disclosure may be implemented.

In addition, the ordinal numbers such as "first" and "second" used for explanation may be changed appropriately. Moreover, the ordinal number may be newly assigned to a component, etc., or may be deleted from a component, etc. Moreover, the ordinal numbers may be assigned to components to differentiate between the components, and may not correspond to the meaningful order.

Moreover, for example, the expression of "at least one of the first element, the second element, or the third element (or one or more elements among the first element, the second element, and the third element)" corresponds to the first element, the second element, the third element, or any combination of the first element, the second element, and the third element.

Although aspects of encoder 100 and decoder 200 have been described based on a plurality of examples, aspects of encoder 100 and decoder 200 are not limited to these examples. The scope of the aspects of encoder 100 and decoder 200 may encompass embodiments obtainable by adding, to any of these embodiments, various kinds of modifications that a person skilled in the art would conceive and embodiments configurable by combining components in different embodiments, without deviating from the scope of the present disclosure.

The present aspect may be performed by combining one or more aspects disclosed herein with at least part of other aspects according to the present disclosure. In addition, the present aspect may be performed by combining, with the other aspects, part of the processes indicated in any of the flow charts according to the aspects, part of the configuration of any of the devices, part of syntaxes, etc.

### [Implementations and Applications]

As described in each of the above embodiments, each functional or operational block may typically be realized as an MPU (micro processing unit) and memory, for example. Moreover, processes performed by each of the functional blocks may be realized as a program execution unit, such as a processor which reads and executes software (a program) recorded on a medium such as ROM. The software may be distributed. The software may be recorded on a variety of media such as semiconductor memory. Note that each functional block can also be realized as hardware (dedicated circuit).

The processing described in each of the embodiments may be realized via integrated processing using a single apparatus (system), and, alternatively, may be realized via decentralized processing using a plurality of apparatuses. Moreover, the processor that executes the above-described program may be a single processor or a plurality of processors. In other words, integrated processing may be performed, and, alternatively, decentralized processing may be performed.

Embodiments of the present disclosure are not limited to the above exemplary embodiments; various modifications may be made to the exemplary embodiments, the results of which are also included within the scope of the embodiments of the present disclosure.

Next, application examples of the moving picture encoding method (image encoding method) and the moving picture decoding method (image decoding method) described in each of the above embodiments will be described, as well as various systems that implement the application examples. Such a system may be characterized as including an image encoder that employs the image encoding method, an image decoder that employs the image decoding method, or an image encoder-decoder that includes both the image encoder and the image decoder. Other configurations of such a system may be modified on a case-by-case basis.

### [Usage Examples]

FIG. 37 illustrates an overall configuration of content providing system ex100 suitable for implementing a content distribution service. The area in which the communication service is provided is divided into cells of desired sizes, and base stations ex106, ex107, ex108, ex109, and ex110, which are fixed wireless stations in the illustrated example, are located in respective cells.

In content providing system ex100, devices including computer ex111, gaming device ex112, camera ex113, home appliance ex114, and smartphone ex115 are connected to internet ex101 via internet service provider ex102 or communications network ex104 and base stations ex106 through ex110. Content providing system ex100 may combine and connect any of the above devices. In various implementations, the devices may be directly or indirectly connected together via a telephone network or near field communication, rather than via base stations ex106 through ex110. Further, streaming server ex103 may be connected to devices including computer ex111, gaming device ex112, camera ex113, home appliance ex114, and smartphone ex115 via, for example, internet ex101. Streaming server ex103 may also be connected to, for example, a terminal in a hotspot in airplane ex117 via satellite ex116.

Note that instead of base stations ex106 through ex110, wireless access points or hotspots may be used. Streaming server ex103 may be connected to communications network ex104 directly instead of via internet ex101 or internet service provider ex102, and may be connected to airplane ex117 directly instead of via satellite ex116.

Camera ex113 is a device capable of capturing still images and video, such as a digital camera. Smartphone ex115 is a smartphone device, cellular phone, or personal handyphone system (PHS) phone that can operate under the mobile communications system standards of the 2G, 3G, 3.9G, and 4G systems, as well as the next-generation 5G system.

Home appliance ex114 is, for example, a refrigerator or a device included in a home fuel cell cogeneration system.

In content providing system ex100, a terminal including an image and/or video capturing function is capable of, for example, live streaming by connecting to streaming server ex103 via, for example, base station ex106. When live streaming, a terminal (e.g., computer ex111, gaming device ex112, camera ex113, home appliance ex114, smartphone ex115, or a terminal in airplane ex117) may perform the encoding processing described in the above embodiments on still-image or video content captured by a user via the terminal, may multiplex video data obtained via the encoding and audio data obtained by encoding audio corresponding to the video, and may transmit the obtained data to streaming server ex103. In other words, the terminal functions as the image encoder according to one aspect of the present disclosure.

Streaming server ex103 streams transmitted content data to clients that request the stream. Client examples include computer ex111, gaming device ex112, camera ex113, home appliance ex114, smartphone ex115, and terminals inside airplane ex117, which are capable of decoding the above-described encoded data. Devices that receive the streamed data decode and reproduce the received data. In other words, the devices may each function as the image decoder, according to one aspect of the present disclosure.

### [Decentralized Processing]

Streaming server ex103 may be realized as a plurality of servers or computers between which tasks such as the processing, recording, and streaming of data are divided. For example, streaming server ex103 may be realized as a content delivery network (CDN) that streams content via a network connecting multiple edge servers located throughout the world. In a CDN, an edge server physically near a client is dynamically assigned to the client. Content is cached and streamed to the edge server to reduce load times. In the event of, for example, some type of error or change in connectivity due, for example, to a spike in traffic, it is possible to stream data stably at high speeds, since it is possible to avoid affected parts of the network by, for example, dividing the processing between a plurality of edge servers, or switching the streaming duties to a different edge server and continuing streaming.

Decentralization is not limited to just the division of processing for streaming; the encoding of the captured data may be divided between and performed by the terminals, on the server side, or both. In one example, in typical encoding, the processing is performed in two loops. The first loop is for detecting how complicated the image is on a frame-by-frame or scene-by-scene basis, or detecting the encoding load. The second loop is for processing that maintains image quality and improves encoding efficiency. For example, it is possible to reduce the processing load of the terminals and improve the quality and encoding efficiency of the content by having the terminals perform the first loop of the encoding and having the server side that received the content perform the second loop of the encoding. In such a case, upon receipt of a decoding request, it is possible for the encoded data resulting from the first loop performed by one terminal to be received and reproduced on another terminal in approximately real time. This makes it possible to realize smooth, real-time streaming.

In another example, camera ex113 or the like extracts a feature amount from an image, compresses data related to the feature amount as metadata, and transmits the compressed metadata to a server. For example, the server determines the significance of an object based on the feature amount and changes the quantization accuracy accordingly to perform compression suitable for the meaning (or content significance) of the image. Feature amount data is particularly effective in improving the precision and efficiency of motion vector prediction during the second compression pass performed by the server. Moreover, encoding that has a relatively low processing load, such as variable length coding (VLC), may be handled by the terminal, and encoding that has a relatively high processing load, such as context-adaptive binary arithmetic coding (CABAC), may be handled by the server.

In yet another example, there are instances in which a plurality of videos of approximately the same scene are captured by a plurality of terminals in, for example, a stadium, shopping mall, or factory. In such a case, for example, the encoding may be decentralized by dividing processing tasks between the plurality of terminals that captured the videos and, if necessary, other terminals that did not capture the videos, and the server, on a per-unit basis. The units may be, for example, groups of pictures (GOP), pictures, or tiles resulting from dividing a picture. This makes it possible to reduce load times and achieve streaming that is closer to real time.

Since the videos are of approximately the same scene, management and/or instructions may be carried out by the server so that the videos captured by the terminals can be cross-referenced. Moreover, the server may receive encoded data from the terminals, change the reference relationship between items of data, or correct or replace pictures themselves, and then perform the encoding. This makes it possible to generate a stream with increased quality and efficiency for the individual items of data.

Furthermore, the server may stream video data after performing transcoding to convert the encoding format of the video data. For example, the server may convert the encoding format from MPEG to VP (e.g., VP9), and may convert H.264 to H.265.

In this way, encoding can be performed by a terminal or one or more servers. Accordingly, although the device that performs the encoding is referred to as a "server" or "terminal" in the following description, some or all of the processes performed by the server may be performed by the terminal, and likewise some or all of the processes performed by the terminal may be performed by the server. This also applies to decoding processes.

### [3D, Multi-angle]

There has been an increase in usage of images or videos combined from images or videos of different scenes concurrently captured, or of the same scene captured from different angles, by a plurality of terminals such as camera ex113 and/or smartphone ex115. Videos captured by the terminals are combined based on, for example, the separately obtained relative positional relationship between the terminals, or regions in a video having matching feature points.

In addition to the encoding of two-dimensional moving pictures, the server may encode a still image based on scene analysis of a moving picture, either automatically or at a point in time specified by the user, and transmit the encoded still image to a reception terminal. Furthermore, when the server can obtain the relative positional relationship between the video capturing terminals, in addition to two-dimensional moving pictures, the server can generate three-dimensional geometry of a scene based on video of the same scene captured from different angles. The server may separately encode three-dimensional data generated from, for example, a point cloud and, based on a result of recognizing or tracking a person or object using three-dimensional data, may select or reconstruct and generate a video to be transmitted to a reception terminal, from videos captured by a plurality of terminals.

This allows the user to enjoy a scene by freely selecting videos corresponding to the video capturing terminals, and allows the user to enjoy the content obtained by extracting a video at a selected viewpoint from three-dimensional data reconstructed from a plurality of images or videos. Furthermore, as with video, sound may be recorded from relatively different angles, and the server may multiplex audio from a specific angle or space with the corresponding video, and transmit the multiplexed video and audio.

In recent years, content that is a composite of the real world and a virtual world, such as virtual reality (VR) and augmented reality (AR) content, has also become popular. In the case of VR images, the server may create images from the viewpoints of both the left and right eyes, and perform encoding that tolerates reference between the two viewpoint images, such as multi-view coding (MVC), and, alternatively, may encode the images as separate streams without referencing. When the images are decoded as separate streams, the streams may be synchronized when reproduced, so as to recreate a virtual three-dimensional space in accordance with the viewpoint of the user.

In the case of AR images, the server superimposes virtual object information existing in a virtual space onto camera information representing a real-world space, based on a three-dimensional position or movement from the perspective of the user. The decoder may obtain or store virtual object information and three-dimensional data, generate two-dimensional images based on movement from the perspective of the user, and then generate superimposed data by seamlessly connecting the images. Alternatively, the decoder may transmit, to the server, motion from the perspective of the user in addition to a request for virtual object information. The server may generate superimposed data based on three-dimensional data stored in the server, in accordance with the received motion, and encode and stream the generated superimposed data to the decoder. Note that superimposed data includes, in addition to RGB values, an α value indicating transparency, and the server sets the α value for sections other than the object generated from three-dimensional data to, for example, 0, and may perform the encoding while those sections are transparent. Alternatively, the server may set the background to a determined RGB value, such as a chroma key, and generate data in which areas other than the object are set as the background.

Decoding of similarly streamed data may be performed by the client (i.e., the terminals), on the server side, or divided therebetween. In one example, one terminal may transmit a reception request to a server, the requested content may be received and decoded by another terminal, and a decoded signal may be transmitted to a device having a display. It is possible to reproduce high image quality data by decentralizing processing and appropriately selecting content regardless of the processing ability of the communications terminal itself. In yet another example, while a TV, for example, is receiving image data that is large in size, a region of a picture, such as a tile obtained by dividing the picture, may be decoded and displayed on a personal terminal or terminals of a viewer or viewers of the TV. This makes it possible for the viewers to share a big-picture view as well as for each viewer to check his or her assigned area, or inspect a region in further detail up close.

In situations in which a plurality of wireless connections are possible over near, mid, and far distances, indoors or outdoors, it may be possible to seamlessly receive content using a streaming system standard such as MPEG-Dynamic Adaptive Streaming over HTTP (MPEG-DASH). The user may switch between data in real time while freely selecting a decoder or display apparatus including the user's terminal, displays arranged indoors or outdoors, etc. Moreover, using, for example, information on the position of the user, decoding can be performed while switching which terminal handles decoding and which terminal handles the displaying of content. This makes it possible to map and display information, while the user is on the move in route to a destination, on the wall of a nearby building in which a device capable of displaying content is embedded, or on part of the ground. Moreover, it is also possible to switch the bit rate of the received data based on the accessibility to the encoded data on a network, such as when encoded data is cached on a server quickly accessible from the reception terminal, or when encoded data is copied to an edge server in a content delivery service.

### [Web Page Optimization]

FIG. 38 illustrates an example of a display screen of a web page on computer ex111, for example. FIG. 39 illustrates an example of a display screen of a web page on smartphone ex115, for example. As illustrated in FIG. 38 and FIG. 39, a web page may include a plurality of image links that are links to image content, and the appearance of the web page differs depending on the device used to view the web page. When a plurality of image links are viewable on the screen, until the user explicitly selects an image link, or until the image link is in the approximate center of the screen or the entire image link fits in the screen, the display apparatus (decoder) may display, as the image links, still images included in the content or I pictures; may display video such as an animated gif using a plurality of still images or I pictures; or may receive only the base layer, and decode and display the video.

When an image link is selected by the user, the display apparatus performs decoding while giving the highest priority to the base layer. Note that if there is information in the HyperText Markup Language (HTML) code of the web page indicating that the content is scalable, the display apparatus may decode up to the enhancement layer. Further, in order to guarantee real-time reproduction, before a selection is made or when the bandwidth is severely limited, the display apparatus can reduce delay between the point in time at which the leading picture is decoded and the point in time at which the decoded picture is displayed (that is, the delay between the start of the decoding of the content to the displaying of the content) by decoding and displaying only forward reference pictures (I picture, P picture, forward reference B picture). Still further, the display apparatus may purposely ignore the reference relationship between pictures, and coarsely decode all B and P pictures as forward reference pictures, and then perform normal decoding as the number of pictures received over time increases.

### [Autonomous Driving]

When transmitting and receiving still image or video data such as two- or three-dimensional map information for autonomous driving or assisted driving of an automobile, the reception terminal may receive, in addition to image data belonging to one or more layers, information on, for example, the weather or road construction as metadata, and associate the metadata with the image data upon decoding. Note that metadata may be assigned per layer and, alternatively, may simply be multiplexed with the image data.

In such a case, since the automobile, drone, airplane, etc., containing the reception terminal is mobile, the reception terminal may seamlessly receive and perform decoding while switching between base stations among base stations ex106 through ex110 by transmitting information indicating the position of the reception terminal. Moreover, in accordance with the selection made by the user, the situation of the user, and/or the bandwidth of the connection, the reception terminal may dynamically select to what extent the metadata is received, or to what extent the map information, for example, is updated.

In content providing system ex100, the client may receive, decode, and reproduce, in real time, encoded information transmitted by the user.

### [Streaming of Individual Content]

In content providing system ex100, in addition to high image quality, long content distributed by a video distribution entity, unicast or multicast streaming of low image quality, and short content from an individual are also possible. Such content from individuals is likely to further increase in popularity. The server may first perform editing processing on the content before the encoding processing, in order to refine the individual content. This may be achieved using the following configuration, for example.

In real time while capturing video or image content, or after the content has been captured and accumulated, the server performs recognition processing based on the raw data or encoded data, such as capture error processing, scene search processing, meaning analysis, and/or object detection processing. Then, based on the result of the recognition processing, the server - either when prompted or automatically - edits the content, examples of which include: correction such as focus and/or motion blur correction; removing low-priority scenes such as scenes that are low in brightness compared to other pictures, or out of focus; object edge adjustment; and color tone adjustment. The server encodes the edited data based on the result of the editing. It is known that excessively long videos tend to receive fewer views. Accordingly, in order to keep the content within a specific length that scales with the length of the original video, the server may, in addition to the low-priority scenes described above, automatically clip out scenes with low movement, based on an image processing result. Alternatively, the server may generate and encode a video digest based on a result of an analysis of the meaning of a scene.

There may be instances in which individual content may include content that infringes a copyright, moral right, portrait rights, etc. Such instance may lead to an unfavorable situation for the creator, such as when content is shared beyond the scope intended by the creator. Accordingly, before encoding, the server may, for example, edit images so as to blur faces of people in the periphery of the screen or blur the inside of a house, for example. Further, the server may be configured to recognize the faces of people other than a registered person in images to be encoded, and when such faces appear in an image, may apply a mosaic filter, for example, to the face of the person. Alternatively, as pre- or post-processing for encoding, the user may specify, for copyright reasons, a region of an image including a person or a region of the background to be processed. The server may process the specified region by, for example, replacing the region with a different image, or blurring the region. If the region includes a person, the person may be tracked in the moving picture, and the person's head region may be replaced with another image as the person moves.

Since there is a demand for real-time viewing of content produced by individuals, which tends to be small in data size, the decoder first receives the base layer as the highest priority, and performs decoding and reproduction, although this may differ depending on bandwidth. When the content is reproduced two or more times, such as when the decoder receives the enhancement layer during decoding and reproduction of the base layer, and loops the reproduction, the decoder may reproduce a high image quality video including the enhancement layer. If the stream is encoded using such scalable encoding, the video may be low quality when in an unselected state or at the start of the video, but it can offer an experience in which the image quality of the stream progressively increases in an intelligent manner. This is not limited to just scalable encoding; the same experience can be offered by configuring a single stream from a low quality stream reproduced for the first time and a second stream encoded using the first stream as a reference.

### [Other Implementation and Application Examples]

The encoding and decoding may be performed by LSI (large scale integration circuitry) ex500 (see FIG. 37), which is typically included in each terminal. LSI ex500 may be configured of a single chip or a plurality of chips. Software for encoding and decoding moving pictures may be integrated into some type of a medium (such as a CD-ROM, a flexible disk, or a hard disk) that is readable by, for example, computer ex111, and the encoding and decoding may be performed using the software. Furthermore, when smartphone ex115 is equipped with a camera, video data obtained by the camera may be transmitted. In this case, the video data is coded by LSI ex500 included in smartphone ex115.

Note that LSI ex500 may be configured to download and activate an application. In such a case, the terminal first determines whether it is compatible with the scheme used to encode the content, or whether it is capable of executing a specific service. When the terminal is not compatible with the encoding scheme of the content, or when the terminal is not capable of executing a specific service, the terminal first downloads a codec or application software and then obtains and reproduces the content.

Aside from the example of content providing system ex100 that uses internet ex101, at least the moving picture encoder (image encoder) or the moving picture decoder (image decoder) described in the above embodiments may be implemented in a digital broadcasting system. The same encoding processing and decoding processing may be applied to transmit and receive broadcast radio waves superimposed with multiplexed audio and video data using, for example, a satellite, even though this is geared toward multicast, whereas unicast is easier with content providing system ex100.

### [Hardware Configuration]

FIG. 40 illustrates further details of smartphone ex115 shown in FIG. 37. FIG. 41 illustrates a configuration example of smartphone ex115. Smartphone ex115 includes antenna ex450 for transmitting and receiving radio waves to and from base station ex110, camera ex465 capable of capturing video and still images, and display ex458 that displays decoded data, such as video captured by camera ex465 and video received by antenna ex450. Smartphone ex115 further includes user interface ex466 such as a touch panel, audio output unit ex457 such as a speaker for outputting speech or other audio, audio input unit ex456 such as a microphone for audio input, memory ex467 capable of storing decoded data such as captured video or still images, recorded audio, received video or still images, and mail, as well as decoded data, and slot ex464 which is an interface for Subscriber Identity Module (SIM) ex468 for authorizing access to a network and various data. Note that external memory may be used instead of memory ex467.

Main controller ex460, which comprehensively controls display ex458 and user interface ex466, power supply circuit ex461, user interface input controller ex462, video signal processor ex455, camera interface ex463, display controller ex459, modulator/demodulator ex452, multiplexer/demultiplexer ex453, audio signal processor ex454, slot ex464, and memory ex467 are connected via bus ex470.

When the user turns on the power button of power supply circuit ex461, smartphone ex115 is powered on into an operable state, and each component is supplied with power from a battery pack.

Smartphone ex115 performs processing for, for example, calling and data transmission, based on control performed by main controller ex460, which includes a CPU, ROM, and RAM. When making calls, an audio signal recorded by audio input unit ex456 is converted into a digital audio signal by audio signal processor ex454, to which spread spectrum processing is applied by modulator/demodulator ex452 and digital-analog conversion and frequency conversion processing are applied by transmitter/receiver ex451, and the resulting signal is transmitted via antenna ex450. The received data is amplified, frequency converted, and analog-digital converted, inverse spread spectrum processed by modulator/demodulator ex452, converted into an analog audio signal by audio signal processor ex454, and then output from audio output unit ex457. In data transmission mode, text, still-image, or video data is transmitted by main controller ex460 via user interface input controller ex462 based on operation of user interface ex466 of the main body, for example. Similar transmission and reception processing is performed. In data transmission mode, when sending a video, still image, or video and audio, video signal processor ex455 compression encodes, by the moving picture encoding method described in the above embodiments, a video signal stored in memory ex467 or a video signal input from camera ex465, and transmits the encoded video data to multiplexer/demultiplexer ex453. Audio signal processor ex454 encodes an audio signal recorded by audio input unit ex456 while camera ex465 is capturing a video or still image, and transmits the encoded audio data to multiplexer/demultiplexer ex453. Multiplexer/demultiplexer ex453 multiplexes the encoded video data and encoded audio data using a determined scheme, modulates and converts the data using modulator/demodulator (modulator/demodulator circuit) ex452 and transmitter/receiver ex451, and transmits the result via antenna ex450.

When a video appended in an email or a chat, or a video linked from a web page, is received, for example, in order to decode the multiplexed data received via antenna ex450, multiplexer/demultiplexer ex453 demultiplexes the multiplexed data to divide the multiplexed data into a bitstream of video data and a bitstream of audio data, supplies the encoded video data to video signal processor ex455 via synchronous bus ex470, and supplies the encoded audio data to audio signal processor ex454 via synchronous bus ex470. Video signal processor ex455 decodes the video signal using a moving picture decoding method corresponding to the moving picture encoding method described in the above embodiments, and video or a still image included in the linked moving picture file is displayed on display ex458 via display controller ex459. Audio signal processor ex454 decodes the audio signal and outputs audio from audio output unit ex457. Since real-time streaming is becoming increasingly popular, there may be instances in which reproduction of the audio may be socially inappropriate, depending on the user's environment. Accordingly, as an initial value, a configuration in which only video data is reproduced, i.e., the audio signal is not reproduced, may be preferable; and audio may be synchronized and reproduced only when an input is received from the user clicking video data, for instance.

Although smartphone ex115 was used in the above example, three other implementations are conceivable: a transceiver terminal including both an encoder and a decoder; a transmitter terminal including only an encoder; and a receiver terminal including only a decoder. In the description of the digital broadcasting system, an example is given in which multiplexed data obtained as a result of video data being multiplexed with audio data is received or transmitted. The multiplexed data, however, may be video data multiplexed with data other than audio data, such as text data related to the video. Further, the video data itself rather than multiplexed data may be received or transmitted.

Although main controller ex460 including a CPU is described as controlling the encoding or decoding processes, various terminals often include Graphics Processing Units (GPUs). Accordingly, a configuration is acceptable in which a large area is processed at once by making use of the performance ability of the GPU via memory shared by the CPU and GPU, or memory including an address that is managed so as to allow common usage by the CPU and GPU. This makes it possible to shorten encoding time, maintain the real-time nature of streaming, and reduce delay. In particular, processing relating to motion estimation, deblocking filtering, sample adaptive offset (SAO), and transformation/quantization can be effectively carried out by the GPU, instead of the CPU, in units of pictures, for example, all at once.

### [Industrial Applicability]

The present disclosure is available for an encoder for encoding a video, etc., and applicable to a video teleconferencing system, etc.

### [Reference Signs List]

100 encoder
102 splitter
104 subtractor
106 transformer
108 quantizer
110 entropy encoder
112, 204 inverse quantizer
114, 206 inverse transformer
116,208 adder
118, 210 block memory
120, 212 loop filter
122, 214 frame memory
124, 216 intra predictor
126, 218 inter predictor
128, 220 prediction controller
130, 222 prediction parameter generator
131, 133, 134, 142, 143 compressor
132, 232, 237 deriver
141 pre-processor
151, 251 circuitry
152, 252 memory
200 decoder
202 entropy decoder
224 splitting determiner
231, 233, 235, 241, 242 decompressor
234 generator
236 synthesizer

## Claims

1. A decoder comprising:
memory; and
circuitry coupled to the memory, wherein
using the memory, the circuitry:
decodes, from a bitstream, a base data unit of a face image related to a face video and one or more enhancement data units of the face image;
decodes, from the bitstream, geometric information corresponding to each of frames of the face video and indicating geometric attributes within a region including a face of a person; and
generates the face video from the base data unit, the one or more enhancement data units, and the geometric information, using a generative model,
in the bitstream, the base data unit is added to a data set corresponding to a first frame that is a frame of the face video, and
in the bitstream, the one or more enhancement data units are added to one or more data sets corresponding to one or more second frames that are one or more frames of the face video and follow the first frame.

2. The decoder according to claim 1, wherein
the circuitry decodes, from a header, control information regarding a control of at least one of face image data units that are the base data unit and the one or more enhancement data units.

3. The decoder according to claim 2, wherein
the control information includes presence information indicating whether a face image data unit is included in an access unit controlled by the header, the face image data unit being one of the face image data units.

4. The decoder according to claim 2 or 3, wherein
when a face image data unit is included in an access unit controlled by the header, the control information includes type information regarding whether the face image data unit is the base data unit or an enhancement data unit, the face image data unit being one of the face image data units, the enhancement data unit being one of the one or more enhancement data units,
when the access unit includes the base data unit, the type information indicates that the face image data unit included in the access unit is the base data unit and continues to be used until a next base data unit, and
when the access unit includes the enhancement data unit, the type information indicates that the face image data unit included in the access unit is the enhancement data unit and is used together with the base data unit.

5. The decoder according to claim 2 or 3, wherein
when a face image data unit is included in an access unit controlled by the header, the control information includes application information indicating whether the face image data unit is applicable to generate and display a frame corresponding to the access unit among the frames of the face video, the face image data unit being one of the face image data units.

6. The decoder according to any one of claims 1 to 3, wherein
each of the base data unit and the one or more enhancement data units is represented by a vector indicating a facial feature included in the face image.

7. The decoder according to any one of claims 1 to 3, wherein
each of the base data unit and the one or more enhancement data units is represented by an image related to the face image.

8. The decoder according to any one of claims 1 to 3, wherein
the circuitry inputs the base data unit, at least one of the one or more enhancement data units, and the geometric information to the generative model to generate a frame of the face video.

9. The decoder according to any one of claims 1 to 3, wherein
the circuitry generates an intermediate image from the base data unit and at least one of the one or more enhancement data units, and inputs the intermediate image and the geometric information to the generative model to generate a frame of the face video.

10. The decoder according to any one of claims 1 to 3, wherein
the circuitry decodes an enhancement data unit using the base data unit as reference, and inputs the enhancement data unit and the geometric information to the generative model to generate a frame of the face video, the enhancement data unit being one of the one or more enhancement data units.

11. The decoder according to any one of claims 1 to 3, wherein
the base data unit is data of part of a face included in the face image, and
an enhancement data unit is data of other part of the face included in the face image, the enhancement data unit being one of the one or more enhancement data units.

12. The decoder according to any one of claims 1 to 3, wherein
the base data unit is data in a first frequency range of the face image, and
an enhancement data unit is data in a second frequency range higher than the first frequency range of the face image, the enhancement data unit being one of the one or more enhancement data units.

13. The decoder according to any one of claims 1 to 3, wherein
the base data unit corresponds to a first image that (i) is related to the face image and (ii) has a first resolution, and
an enhancement data unit corresponds to a second image that (i) is related to the face image, (ii) is decoded using the first image as reference, and (iii) has a second resolution higher than the first resolution, the enhancement data unit being one of the one or more enhancement data units.

14. The decoder according to any one of claims 1 to 3, wherein
the base data unit corresponds to a first image that (i) is related to the face image and (ii) is decoded with a first quantization step size, and
an enhancement data unit corresponds to a second image that (i) is related to the face image and (ii) is decoded with a second quantization step size finer than the first quantization step size using the first image as reference, the enhancement data unit being one of the one or more enhancement data units.

15. The decoder according to claim 2 or 3, wherein
the control information includes identification information for identifying each of the one or more enhancement data units.

16. The decoder according to claim 2 or 3, wherein
the control information includes total number information (i) included in the header of an access unit including the base data unit and (ii) indicating a total number of the one or more enhancement data units.

17. The decoder according to claim 2 or 3, wherein
the control information includes specification information (i) included in the header of an access unit including the base data unit and (ii) for specifying an enhancement data unit that is applicable to generate and display a second frame corresponding to an access unit including the enhancement data unit, the enhancement data unit being among the one or more enhancement data units, the second frame being among the one or more second frames.

18. The decoder according to any one of claims 1 to 3, wherein
the circuitry decodes at least one control parameter for controlling a stream buffer at which the bitstream is stored in the memory, the at least one control parameter being for controlling a buffer size of the stream buffer to be smaller than or equal to a reference size and an initial delay time at start of a decoding process to be shorter than or equal to a reference delay time.

19. An encoder comprising:
memory; and
circuitry coupled to the memory, wherein
using the memory, the circuitry:
encodes, into a bitstream, a base data unit of a face image related to a face video and one or more enhancement data units of the face image; and
encodes, into the bitstream, geometric information corresponding to each of frames of the face video and indicating geometric attributes within a region including a face of a person,
in the bitstream, the base data unit is added to a data set corresponding to a first frame that is a frame of the face video, and
in the bitstream, the one or more enhancement data units are added to one or more data sets corresponding to one or more second frames that are one or more frames of the face video and follow the first frame.

20. The encoder according to claim 19, wherein
the circuitry encodes, into a header, control information regarding a control of at least one of face image data units that are the base data unit and the one or more enhancement data units.

21. The encoder according to claim 20, wherein
the control information includes presence information indicating whether a face image data unit is included in an access unit controlled by the header, the face image data unit being one of the face image data units.

22. The encoder according to claim 20 or 21, wherein
when a face image data unit is included in an access unit controlled by the header, the control information includes type information regarding whether the face image data unit is the base data unit or an enhancement data unit, the face image data unit being one of the face image data units, the enhancement data unit being one of the one or more enhancement data units,
when the access unit includes the base data unit, the type information indicates that the face image data unit included in the access unit is the base data unit and continues to be used until a next base data unit, and
when the access unit includes the enhancement data unit, the type information indicates that the face image data unit included in the access unit is the enhancement data unit and is used together with the base data unit.

23. The encoder according to claim 20 or 21, wherein
when a face image data unit is included in an access unit controlled by the header, the control information includes application information indicating whether the face image data unit is applicable to generate and display a frame corresponding to the access unit among the frames of the face video, the face image data unit being one of the face image data units.

24. The encoder according to any one of claims 19 to 21, wherein
each of the base data unit and the one or more enhancement data units is represented by a vector indicating a facial feature included in the face image.

25. The encoder according to any one of claims 19 to 21, wherein
each of the base data unit and the one or more enhancement data units is represented by an image related to the face image.

26. The encoder according to any one of claims 19 to 21, wherein
the circuitry derives and encodes, as the base data unit, data of part of a face included in the face image, and derives and encodes, as an enhancement data unit, data of other part of the face included in the face image, the enhancement data unit being one of the one or more enhancement data units.

27. The encoder according to any one of claims 19 to 21, wherein
the circuitry derives and encodes, as the base data unit, data in a first frequency range of the face image, and derives and encodes, as an enhancement data unit, data in a second frequency range higher than the first frequency range of the face image, the enhancement data unit being one of the one or more enhancement data units.

28. The encoder according to any one of claims 19 to 21, wherein
the circuitry encodes, as the base data unit, a first image that (i) is related to the face image and (ii) has a first resolution, and encodes, as the base data unit, a second image that (i) is related to the face image, (ii) is encoded using the first image as reference, and (iii) has a second resolution higher than the first resolution.

29. A decoding method comprising:
decoding, from a bitstream, a base data unit of a face image related to a face video and one or more enhancement data units of the face image;
decoding, from the bitstream, geometric information corresponding to each of frames of the face video and indicating geometric attributes within a region including a face of a person; and
generating the face video from the base data unit, the one or more enhancement data units, and the geometric information, using a generative model, wherein
in the bitstream, the base data unit is added to a data set corresponding to a first frame that is a frame of the face video, and
in the bitstream, the one or more enhancement data units are added to one or more data sets corresponding to one or more second frames that are one or more frames of the face video and follow the first frame.

30. An encoding method comprising:
encoding, into a bitstream, a base data unit of a face image related to a face video and one or more enhancement data units of the face image; and
encoding, into the bitstream, geometric information corresponding to each of frames of the face video and indicating geometric attributes within a region including a face of a person, wherein
in the bitstream, the base data unit is added to a data set corresponding to a first frame that is a frame of the face video, and
in the bitstream, the one or more enhancement data units are added to one or more data sets corresponding to one or more second frames that are one or more frames of the face video and follow the first frame.
